(19) Europäisches Patentamt
European Patent Office
Office européen des brevets

(11) **EP 3 159 537 A1**

(12) **EUROPEAN PATENT APPLICATION**
published in accordance with Art. 153(4) EPC

(43) Date of publication:
**26.04.2017 Bulletin 2017/17**

(51) Int Cl.:
***F03D 7/02*** (2006.01)

(21) Application number: **14885526.5**

(22) Date of filing: **14.03.2014**

(86) International application number:
**PCT/JP2014/056891**

(87) International publication number:
**WO 2015/136687 (17.09.2015 Gazette 2015/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Chiyoda-ku**
**Tokyo 100-8280 (JP)**

(72) Inventor: **IKEDA Masaki**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **WIND FARM CONTROL METHOD AND WIND FARM CONTROL SYSTEM**

(57) Provided is a wind farm control system that allows an entire wind farm to operate efficiently by taking into consideration the influence of slipstream generated in the wind farm. A wind farm control system comprising a plurality of wind power generators disposed on land or on sea is characterized by comprising: a display device to display wind speed data and output data for each wind power generator of the plurality of wind power generators; a combination determining device to calculate combinations of running or stopping each wind power generator in the wind farm by calculating, using the wind speed data, output data, and a prescribed slipstream wind speed evaluation formula, an estimated value for the maximum output of the wind farm when currently running wind power generators are stopped and the maximum output of the wind farm when currently stopped wind power generators are run and comparing the estimated values with the measured values for the wind farm output; and a control device to run or stop each wind power generator in the wind farm on the basis of these combinations.

[Fig. 10]

**Description**

Technical Field

The present invention relates to a control method for a wind farm constituted of a plurality of wind power generators, and a control system for the wind farm.

Background Art

The Wind having passed through a wind receiving portion of a wind power generator, that is, a slipstream in the wind power generator has a lower wind speed than that of the wind before passing through the wind receiving portion of the wind power generator. Due to this influence of the slipstream, in a wind farm in which a plurality of wind power generators are installed, an output (power generation amount) of a wind power generator provided on the leeward side may be lower than output (power generation amount) of a wind power generator provided on the windward side. Therefore, in a wind farm constituted of a plurality of wind power generators, it is a major object for establishing a wind power generation business to obtain a larger power generation amount in the entire wind farm by reducing the influence of the slipstream.

Citation List

Patent Literature

PTL 1: JP-A-2011-7085

Summary of Invention

Technical Problem

As a technique for reducing the influence of a slipstream generated in a wind farm, a technique as in PTL 1 is disclosed. In PTL 1, in a floating offshore wind farm constituted of floating offshore wind power generators, the influence of a slipstream is reduced by moving the floating offshore wind power generators in a horizontal direction. However, the technique disclosed in PTL 1 can only be applied to the floating offshore wind farm, and energy is lost when moving positions of the floating offshore wind power generators.

Therefore, an object of the invention is to provide a wind farm control method of allowing the entire wind farm to operate efficiently by taking into consideration the influence of a slipstream generated in a wind farm, the wind farm being constituted of a plurality of wind power generators disposed on land or on sea.

Another object of the present invention is to provide a wind farm control system which allows the entire wind farm to operate efficiently by taking into consideration the influence of a slipstream generated in a wind farm, the wind farm being constituted of a plurality of wind power generators disposed on land or on sea.

Solution to Problem

In order to solve the above-described problem, according to the present invention, there is provided a control method for a wind farm constituted of a plurality of wind power generators disposed on land or on sea, the method including a step of measuring an output of the wind farm; a step of calculating the number of wind power generators to be stopped which causes an estimated value for the output of the wind farm to be the maximum and positions thereof in the wind farm in a case where currently running wind power generators are stopped among the plurality of wind power generators; and a step of calculating the number of wind power generators to be run which causes an estimated value for the output of the wind farm to be the maximum and positions thereof in the wind farm in a case where currently stopped wind power generators are run among the plurality of wind power generators, in which a wind power generator to be run or a wind power generator to be stopped is determined among the plurality of wind power generators of the wind farm so that an output value of the wind farm is the maximum, by comparing the measured output of the wind farm, the maximum value of the estimated value for the output of the wind farm in a case where the currently running wind power generator is stopped, and the maximum value of the estimated value for the output of the wind farm in a case where the currently stopped wind power generator is run with each other.

According to the present invention, there is provided a control system for a wind farm constituted of a plurality of wind power generators disposed on land or on sea, the control system including a display device that displays wind speed data and output data of each of the plurality of wind power generators; a combination determining device that calculates combinations of running or stoppage of the respective wind power generators in the wind farm by calculating, by using the wind speed data, the output data, and a predetermined slipstream wind speed evaluation formula, an estimated value for the maximum output of the wind farm in a case where a currently running wind power generator is stopped and an estimated value for the maximum output of the wind farm in a case where a currently stopped wind power generator is run and, comparing the estimated values with measured values for the output of the wind farm; and a control device that controls running or stoppage of each of the wind power generators in the wind farm on the basis of the combinations.

According to the present invention, there is provided a control system for a wind farm constituted of a plurality of wind power generators disposed on land or on sea, in which the plurality of wind power generators are at least three wind power generators including a first wind power generator provided on a windward side, a second wind power generator provided on a leeward side, and a third wind power generator interposed between the first wind power generator and the second wind power generator, the control system including a display device that displays wind speed data and output data of each of the first wind power generator, the second wind power generator, and the third wind power generator; an output estimation device that calculates estimated values for outputs of the second wind power generator and the third wind power generator by using the wind speed data or the output data, and a predetermined slipstream wind speed evaluation formula; an output comparison device that performs comparison between two or more output data items or estimated values for outputs among output data items of the first wind power generator, the second wind power generator, and the third wind power generator, or a total value of output data items of combinations thereof, and estimated values for outputs of the second wind power generator and the third wind power generator, or a total value of the estimated values for the outputs thereof, and thus determines running or stoppage of each of the wind power generators in the wind farm; and a control device that controls running or stoppage of each of the wind power generators in the wind farm on the basis of the determination result.

Advantageous Effects of Invention

According to the present invention, it is possible to provide the wind farm control method of allowing the entire wind farm to operate efficiently by taking into consideration the influence of a slipstream generated in the wind farm.

According to the present invention, it is possible to provide the wind farm control system which allows the entire wind farm to operate efficiently by taking into consideration the influence of a slipstream generated in the wind farm.

Problems, configurations, and effects other than the above description will become apparent through description of the following embodiments.

Brief Description of Drawings

[Fig. 1A] Fig. 1A is a diagram illustrating arrangement of wind power generators in a wind farm according to one embodiment of the present invention.

[Fig. 1B] Fig. 1B is a diagram illustrating arrangement of wind power generators in a wind farm according to one embodiment of the present invention.

[Fig. 2] Fig. 2 is a flowchart illustrating a method of obtaining combinations of running and stoppage of the wind power generators in the wind farm according to one embodiment of the present invention.

[Fig. 3] Fig. 3 is a flowchart illustrating a method of obtaining estimated values for outputs of the wind power generators in the wind farm according to one embodiment of the present invention.

[Fig. 4] Fig. 4 is a flowchart illustrating a method of obtaining estimated values for outputs of the wind power generators in the wind farm according to one embodiment of the present invention.

[Fig. 5] Fig. 5 is a diagram illustrating arrangement of the wind power generators in the wind farm according to one embodiment of the present invention.

[Fig. 6A] Fig. 6A is a flowchart illustrating a method of determining running or stoppage of the wind power generators in the wind farm according to one embodiment of the present invention.

[Fig. 6B] Fig. 6B is a flowchart illustrating a method of determining running or stoppage of the wind power generators in the wind farm according to one embodiment of the present invention.

[Fig. 7] Fig. 7 is a diagram illustrating arrangement of the wind power generators in the wind farm according to one embodiment of the present invention.

[Fig. 8] Fig. 8 is a flowchart illustrating a method of determining running or stoppage of the wind power generators in the wind farm according to one embodiment of the present invention.

[Fig. 9A] Fig. 9A is a diagram illustrating arrangement of the wind power generators in the wind farm according to one embodiment of the present invention.

[Fig. 9B] Fig. 9B is a diagram illustrating arrangement of the wind power generators in the wind farm according to one embodiment of the present invention.

[Fig. 9C] Fig. 9C is a diagram illustrating arrangement of the wind power generators in the wind farm according to one embodiment of the present invention.

[Fig. 10] Fig. 10 is a diagram illustrating the entire summary of a wind farm control system according to one embodiment of the present invention.

[Fig. 11] Fig. 11 is a diagram illustrating the entire summary of a wind farm control system according to one embodiment of the present invention.

[Fig. 12A] Fig. 12A is a top view of the wind power generator in the wind farm according to one embodiment of the present invention.

[Fig. 12B] Fig. 12B is a top view of the wind power generator in the wind farm according to one embodiment of the present invention.

[Fig. 13A] Fig. 13A is a partial sectional view of the wind power generator in the wind farm according to one embodiment of the present invention.

[Fig. 13B] Fig. 13B is a partial sectional view of the wind power generator in the wind farm according to one embodiment of the present invention.

[Fig. 14A] Fig. 14A is a diagram illustrating a control example of the wind farm performed by the wind farm control system according to one embodiment of the present invention.

[Fig. 14B] Fig. 14B is a diagram illustrating a control example of the wind farm performed by the wind farm control system according to one embodiment of the present invention.

[Fig. 15A] Fig. 15A is a diagram illustrating a control example of the wind farm performed by the wind farm control system according to one embodiment of the present invention.

[Fig. 15B] Fig. 15B is a diagram illustrating a control example of the wind farm performed by the wind farm control system according to one embodiment of the present invention. Description of Embodiments

Hereinafter, with reference to the drawings, Examples of the present invention will be described.

Example 1

In the present example, a description will be made of an example in which combinations of running and stoppage of wind power generators are obtained when an output of a wind farm is the maximum, and the wind farm operates according to the combinations of running and stoppage of the wind power generators obtained here. In the present example, the combinations of running and stoppage of the wind power generators indicate a method of allocating running and stoppage to each wind power generator in the wind farm.

For example, in a wind farm constituted of three wind power generators, the number of combinations of running and stoppage of the wind power generators is 8 ($2^3$), and, in a wind farm constituted of four wind power generators, the number of combinations of running and stoppage of the wind power generators is 16 ($2^4$).

In the present example, a wind power generator provided on the windward side of the wind power generator which is assumed to be stopped is simply referred to as a wind power generator (stopped and windward); a wind power generator provided on the leeward side of the wind power generator which is assumed to be stopped is simply referred to as a wind power generator (stopped and leeward); a wind power generator provided on the windward side of the wind power generator which is assumed to be run is simply referred to as a wind power generator (run and windward); and a wind power generator provided on the leeward side of the wind power generator which is assumed to be run is simply referred to as a wind power generator (run and leeward).

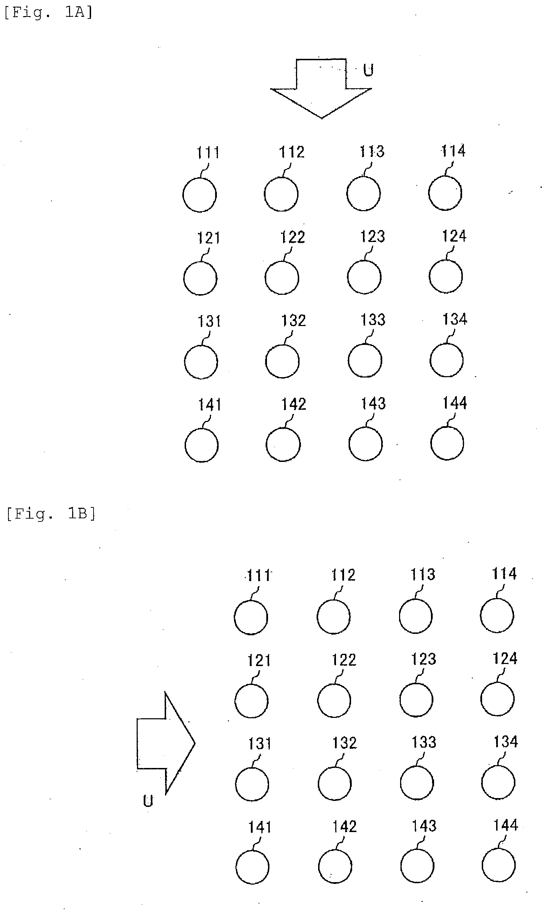

Figs. 1A and 1B illustrate examples of a wind farm used for description of the present example. The wind farm illustrated in Figs. 1A and 1B is constituted of 16 wind power generators. The upper wind power generators are defined as a wind power generator 111, a wind power generator 112, a wind power generator 113, and a wind power generator 114 in this order from the left. The wind power generators in the second row from the top are defined as a wind power generator 121, a wind power generator 122, a wind power generator 123, and a wind power generator 124 in this order from the left. The wind power generators in the third row from the top are defined as a wind power generator 131, a wind power generator 132, a wind power generator 133, and a wind power generator 134 in this order from the left. The wind power generators in the fourth row from the top are defined as a wind power generator 141, a wind power generator 142, a wind power generator 143, and a wind power generator 144 in this order from the left.

When the wind is directed downwardly from the top as in Fig. 1A, the wind power generator 111, the wind power generator 112, the wind power generator 113, and the wind power generator 114 are wind power generators provided on the most windward side, and, when the wind is directed from the left to the right as illustrated in Fig. 1B, the wind power generator 111, the wind power generator 121, the wind power generator 131, and the wind power generator 141 are wind power generators provided on the most windward side. In Figs. 1A and 1B, a wind speed is indicated by U.

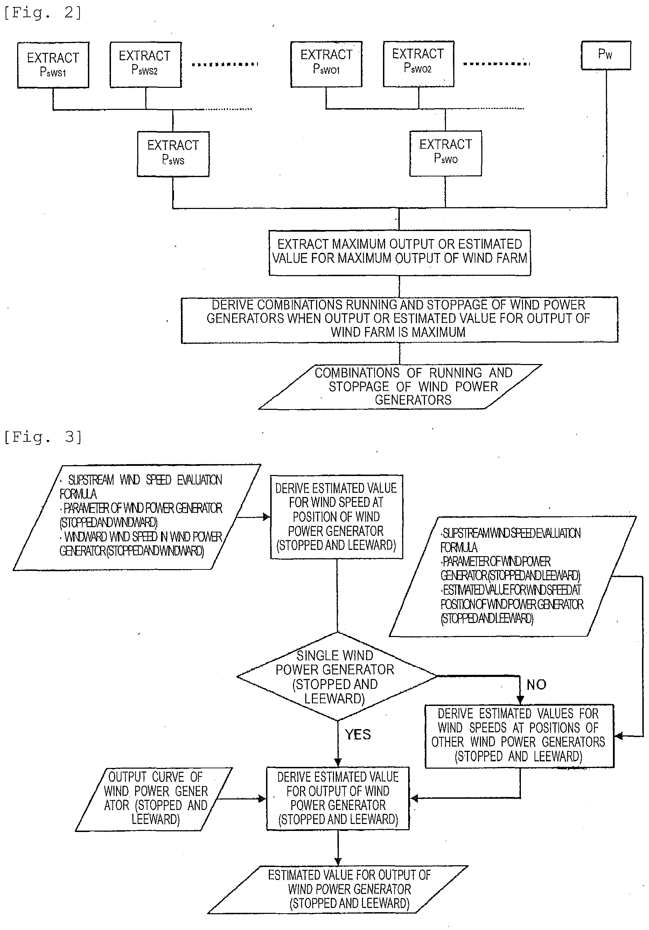

Fig. 2 is a diagram illustrating an example of a method of obtaining combinations of running and stoppage of the wind power generators when output of the wind farm is the maximum. In this method, as in Fig. 2, an estimated value for an output of the wind farm is obtained so as to be divided into a case where several wind power generators in a run state are assumed to be stopped and a case where several wind power generators in a stopped state are assumed to be run.

First, a description will be made of a method of obtaining estimated values for outputs of the wind farm when several wind power generators in a run state are assumed to be stopped, and extracting an estimated value for the maximum output from the estimated values for the outputs.

Initially, wind power generators in a run state are assumed to be stopped one by one, and each estimated value for an output of the wind farm is obtained. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the twelve currently running wind power generators are assumed to be stopped one by one, and each estimated value for an output of the wind farm, that is, twelve estimated values for outputs of the wind farm are obtained. An estimated value $P_{sWS1}$ for the maximum output is extracted from the estimated values of the outputs of the wind farm obtained here.

This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the estimated value $P_{sWS1}$ for the maximum output is extracted from the twelve estimated values for outputs of the wind farm.

Next, wind power generators in a run state are assumed to be stopped two by two, and each estimated value for an output of the wind farm is obtained. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the twelve currently running wind power generators are assumed to be stopped two by two, and each estimated value for an output of the wind farm, that is, 66 ($_{12}C_2$) estimated values for outputs of the wind farm are obtained. An estimated value $P_{sWS2}$ for the maximum output is extracted from the estimated values of output of the wind farm obtained here.

This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the estimated value $P_{sWS2}$ for the maximum output is extracted from the 66 ($_{12}C_2$) estimated values for outputs of the wind farm.

In the above description, the wind power generators in a run state are assumed to be stopped one by one and are assumed to be stopped two by two, estimated values for the maximum output are extracted from the respective estimated values for outputs of the wind farm, and this is also the same for remaining numbers of wind power generators so that estimated values for outputs of the wind farm when the wind power generators are assumed to be stopped are obtained, and an estimated value for the maximum output is extracted from the obtained estimated values for the outputs of the wind farm.

This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, an estimated value $P_{sWS3}$ for the maximum output is extracted from estimated values for outputs of the wind farm obtained by assuming that the currently running wind power generators are stopped three by three, an estimated value $P_{sWS4}$ for the maximum output is extracted from estimated values for outputs of the wind farm obtained by assuming that the currently running wind power generators are stopped four by four, an estimated value $P_{sWS5}$ for the maximum output is extracted from estimated values for outputs of the wind farm obtained by assuming that the currently running wind power generators are stopped five by five, an estimated value $P_{sWS6}$ for the maximum output is extracted from estimated values for outputs of the wind farm obtained by assuming that the currently running wind power generators are stopped six by six, an estimated value $P_{sWS7}$ for the maximum output is extracted from estimated values for outputs of the wind farm obtained by assuming that the currently running wind power generators are stopped seven by seven, an estimated value $P_{sWS8}$ for the maximum output is extracted from estimated values for outputs of the wind farm obtained by assuming that the currently running wind power generators are stopped eight by eight, an estimated value $P_{sWS9}$ for the maximum output is extracted from estimated values for outputs of the wind farm obtained by assuming that the currently running wind power generators are stopped nine by nine, an estimated value $P_{sWS10}$ for the maximum output is extracted from estimated values for outputs of the wind farm obtained by assuming that the currently running wind power generators are stopped ten by ten, an estimated value $P_{sWS11}$ for the maximum output is extracted from estimated values for outputs of the wind farm obtained by assuming that the currently running wind power generators are stopped eleven by eleven, and an estimated value $P_{sWS12}$ is extracted from outputs of the wind farm obtained by assuming that the currently running wind power generators are stopped twelve by twelve.

An estimated value $P_{sWS}$ for the maximum output is extracted from the estimated values for output extracted here. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the estimated value $P_{sWS}$ for the maximum output is extracted from $P_{sWS1}$, $P_{sWS2}$, $P_{sWS3}$, $P_{sWS4}$, $P_{sWS5}$, $P_{sWS6}$ $P_{sWS7}$, $P_{sWS8}$, $P_{sWS9}$, $P_{sWS10}$, $P_{sWS11}$, and $P_{sWS12}$.

Here, a description will be made of a method of obtaining an estimated value for an output of a wind power generator (stopped and leeward).

Fig. 3 is a diagram illustrating an example of a method of obtaining an estimated value for an output of a wind power generator (stopped and leeward) when a wind power generator interposed between two currently running wind power generators is assumed to be stopped in a state in which the wind power generator interposed between the two currently running wind power generators is being run. As illustrated in Fig. 3, a windward wind speed in a wind power generator (stopped and windward) is necessary in order to obtain the estimated value for the output of the wind power generator (stopped and leeward).

This corresponds to a case where, for example, in the wind farm illustrated in Fig. 1A, when the wind power generator 121 is assumed to be stopped in a state in which the wind power generator 111, the wind power generator 121, the wind power generator 131, and the wind power generator 141 are being run, a windward wind speed in the wind power generator 111 is necessary in order to obtain an estimated value for an output of the wind power generator 131. A windward wind speed in the wind power generator is obtained through measurement, but if there is no function of measuring a windward wind speed in the wind power generator, the windward wind speed in the wind power generator is obtained on the basis of an output of the wind power generator and an output curve of the wind power generator. Here, the output curve is a curve indicating a relationship between a windward wind speed in the wind power generator and an output of the wind power generator.

First, a parameter (a radius of a wind turbine rotor, a thrust coefficient, or the like) of the wind power generator (stopped and windward), the windward wind speed in the wind power generator (stopped and windward), or the like is assigned to a slipstream wind speed evaluation formula, and thus an estimated value for a wind speed at a position of the wind power generator (stopped and leeward) is obtained. In a case where there are a plurality of wind power generators (stopped and leeward), an operation is repeatedly performed in which a parameter of the wind power generator (stopped and leeward), the obtained estimated value for the wind speed at the position of the wind power generator (stopped and leeward), or the like is assigned to the slipstream wind speed evaluation formula, and thus an estimated value for a wind speed at a position of a wind power generator (stopped and leeward) provided further toward the leeward side than the wind power generator (stopped and leeward) is obtained.

This corresponds to a case where, for example, in the wind farm illustrated in Fig. 1A, when the wind power generator 121 is assumed to be stopped in a state in which the wind power generator 111, the wind power generator 121, the wind power generator 131, and the wind power generator 141 are being run, an estimated value for a wind speed at the position of the wind power generator 131 is obtained by assigning a parameter of the wind power generator 111, a windward wind speed in the wind power generator 111, or the like to the slipstream wind speed evaluation formula, and an estimated value for a wind speed at the position of the wind power generator 141 is obtained by assigning a parameter of the wind power generator 131, the estimated value for the wind speed at the position of the wind power generator 131, or the like to the slipstream wind speed evaluation formula.

As examples of the slipstream wind speed evaluation formula, there are Equations 1, 2 and 3. In Equations 1, 2 and 3, Uo indicates a windward wind speed in a wind power generator provided on the windward side, ro indicates a radius of a wind turbine rotor of the wind power generator provided on the windward side, x indicates a distance between the wind power generator provided on the windward side and a wind speed measurement point, Ct indicates a thrust coefficient of the wind power generator provided on the windward side, and k indicates a slipstream attenuation coefficient. In the present example, a slipstream wind speed obtained from Equation 1 is defined as $U_{wm1}$, a slipstream wind speed obtained from Equation 2 is defined as $U_{wm2}$, and a slipstream wind speed obtained from Equation 3 is defined as $U_{wm3}$.

[Equation 1]

$$U_{wm1} = U_0 \left\{ 1 - \frac{2}{3} \left( \frac{r_0}{r_0 + 0.1x} \right)^2 \right\}$$

[Equation 2]

$$U_{wm2} = U_0 \left\{ 1 - \left(1 - \sqrt{1 - C_t}\right)\left(\frac{r_0}{r_0 + kx}\right)^2 \right\}$$

[Equation 3]

$$U_{wm3} = U_0 \left\{ 1 - \frac{1}{2} \cdot \left(1 - \sqrt{1 - C_t}\right)\left(1 + \frac{2x}{\sqrt{1 + 4x^2}}\right) \right\}$$

After the estimated value for the wind speed at the position of the wind power generator (stopped and leeward) is obtained, an estimated value for an output of the wind power generator (stopped and leeward) is obtained on the basis of the estimated value for the wind speed at the position of the wind power generator (stopped and leeward) and the output curve of the wind power generator (stopped and leeward).

The estimated value for the output of the wind power generator (stopped and leeward) is obtained according to the above-described method.

Next, a description will be made of a method of obtaining estimated values for outputs of the wind farm when several wind power generators in a stopped state are assumed to be run, and extracting an estimated value for the maximum output from the estimated values for the outputs.

First, wind power generators in a stopped state are assumed to be run one by one, and each estimated value for an output of the wind farm is obtained. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the four currently stopped wind power generators are assumed to be run one by one, and each estimated value for an output of the wind farm, that is, four estimated values for outputs of the wind farm are obtained. An estimated value $P_{sWO1}$ for the maximum output is extracted from the estimated values of output of the wind farm obtained here. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the estimated value $P_{sWO1}$ is extracted from the four estimated values for outputs of the wind farm.

Next, wind power generators in a stopped state are assumed to be run two by two, and each estimated value for an output of the wind farm is obtained. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the four currently stopped wind power generators are assumed to be run two by two, and each estimated value for an output of the wind farm, that is, 6 ($_4C_2$) estimated values for outputs of the wind farm are obtained. An estimated value $P_{sWO2}$ for the maximum output is extracted from the estimated values for the outputs of the wind farm obtained here. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the estimated value $P_{sWO2}$ for the maximum output is extracted from the 6 ($_4C_2$) estimated values for the outputs of the wind farm.

In the above description, the wind power generators in a stopped state are assumed to be run one by one and are assumed to be run two by two, estimated values for the maximum output are extracted from the respective estimated values for the outputs of the wind farm, and this is also the same for remaining numbers of wind power generators so that estimated values for outputs of the wind farm when the wind power generators are assumed to be run are obtained, and an estimated value for the maximum output is extracted from the obtained estimated values for the outputs of the wind farm.

This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, an estimated value $P_{sWO3}$ for the maximum output is extracted from estimated values for outputs of the wind farm obtained by assuming that the currently stopped wind power generators are run three by three, and an estimated value $P_{sWO4}$ is extracted from estimated values for outputs of the wind farm obtained by assuming that the four currently stopped wind power generators are run.

An estimated value $P_{sWO}$ for the maximum output is extracted from the estimated values for output extracted here. This corresponds to a case where, for example, in the wind farm illustrated in Fig. 1A, in a state in which four wind power generators including the wind power generator 121, the wind power generator 122, the wind power generator 123, and the wind power generator 124 are stopped, and the remaining twelve wind power generators are being run, the estimated value $P_{sWO}$ for the maximum output is extracted from $P_{sWSO1}$, $P_{sWO2}$, $P_{sWO3}$, and $P_{sWO4}$.

. Here, a description will be made of a method of obtaining an estimated value for an output of a wind power generator which is assumed to be run and an estimated value for an output of a wind power generator (run and leeward).

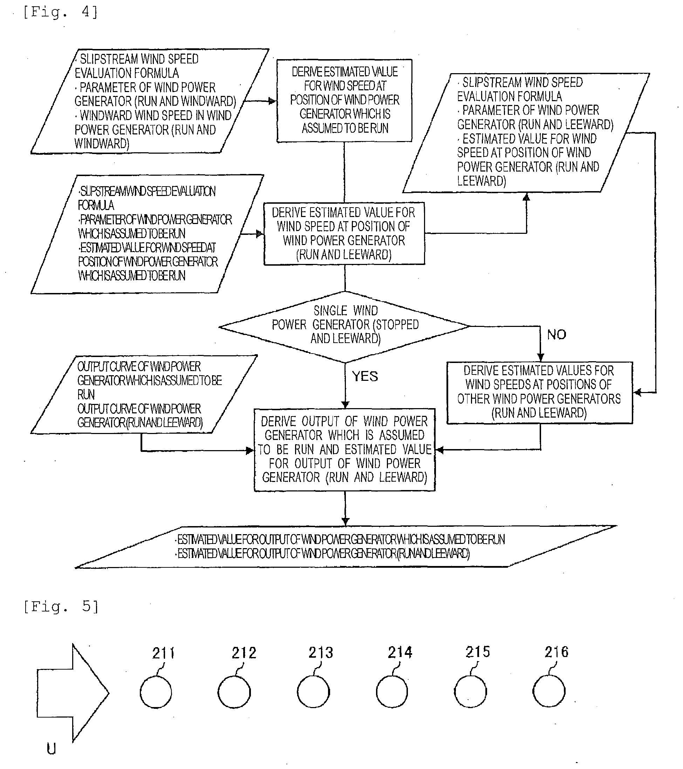

Fig. 4 is a diagram illustrating an example of a method of obtaining an estimated value for an output of a wind power generator which is assumed to be run and an estimated value for an output of a wind power generator (run and leeward) when a wind power generator interposed between two currently running wind power generators is assumed to be run in a state in which the wind power generator interposed between the two currently running wind power generators is stopped. As illustrated in Fig. 4, a windward wind speed in a wind power generator (run and windward) is necessary in order to obtain the estimated value for the output of the wind power generator which is assumed to be run.

This corresponds to a case where, for example, in the wind farm illustrated in Fig. 1A, when the wind power generator 121 is assumed to be run in a state in which the wind power generator 111, the wind power generator 131, and the wind power generator 141 are being run, and the wind power generator 121 is stopped, a windward wind speed in the wind power generator 111 is necessary in order to obtain an estimated value for an output of the wind power generator 121. A windward wind speed in the wind power generator is obtained through measurement, but if there is no function of measuring a windward wind speed in the wind power generator, the windward wind speed in the wind power generator is obtained on the basis of an output of the wind power generator and an output curve of the wind power generator.

First, a parameter of the wind power generator (run and windward), the windward wind speed in the wind power generator (run and windward), or the like is assigned to a slipstream wind speed evaluation formula, and thus an estimated value for a wind speed at a position of the wind power generator which is assumed to be run is obtained. In addition, a parameter of the wind power generator which is assumed to be run, the estimated value for the wind speed at the position of the wind power generator which is assumed to be run, or the like is assigned to the slipstream wind speed evaluation formula, and thus an estimated value for a wind speed at a position of the wind power generator (run and leeward) is obtained. In a case where there are a plurality of wind power generators (run and leeward), an operation is repeatedly performed in which a parameter of the wind power generator (run and leeward), the obtained estimated value for the wind speed at the position of the wind power generator (run and leeward), or the like is assigned to the slipstream wind speed evaluation formula, and thus an estimated value for a wind speed at a position of a wind power generator (run and leeward) provided further toward the leeward side than the wind power generator (run and leeward) is obtained.

This corresponds to a case where, for example, in the wind farm illustrated in Fig. 1A, when the wind power generator 121 is assumed to be run in a state in which the wind power generator 111, the wind power generator 131, and the wind power generator 141 are running, and the wind power generator 121 is stopped, an estimated value for wind speed at the position of the wind power generator 121 is obtained by assigning a parameter of the wind power generator 111, a windward wind speed in the wind power generator 111, or the like to the slipstream wind speed evaluation formula, an estimated value for wind speed at the position of the wind power generator 131 is obtained by assigning a parameter of the wind power generator 121, the estimated value for the wind speed at the position of the wind power generator 121, or the like to the slipstream wind speed evaluation formula, and an estimated value for a wind speed at the position of the wind power generator 141 is obtained by assigning a parameter of the wind power generator 131, the estimated value for the wind speed at the position of the wind power generator 131, or the like to the slipstream wind speed evaluation formula.

After the estimated value for the wind speed at the position of the wind power generator which is assumed to be run, and the estimated value for the wind speed at the position of the wind power generator (run and leeward) are obtained, an estimated value for an output of the wind power generator which is assumed to be run is obtained on the basis of the estimated value for the wind speed at the position of the wind power generator which is assumed to be run and the output curve of the wind power generator which is assumed to be run, and an estimated value for an output of the wind power generator (run and leeward) is obtained on the basis of the estimated value for the wind speed at the position of the wind power generator (run and leeward) and the output curve of the wind power generator (run and leeward).

The estimated value for the output of the wind power generator which is assumed to be run and the estimated value for the output of the wind power generator (run and leeward) are obtained according to the above-described method.

$P_{sWS}$ and $P_{sWO}$ are obtained, and then the present output Pw of the wind farm, and $P_{sWS}$ and $P_{sWO}$ are compared with each other so that the greatest output or estimated value for the output is extracted. In addition, combinations of running and stoppage of the wind power generators at the output or the estimated value for the output extracted here are obtained.

In the present example, the above-described combinations of running and stoppage of the wind power generators are obtained in real time, and the wind farm is operated according to the combinations of the wind power generators obtained here. As a result, the wind farm can be operated in a state in which the output of the wind farm is the maximum.

In the present example, an example of the wind farm constituted of 16 wind power generators of 4 rows and 4 columns has been described, but a wind farm constituted of any number of wind power generators is also included in the present example. In the present example, Equations 1, 2 and 3 have been described as examples of the slipstream wind speed evaluation formulae, but examples of using other slipstream wind speed evaluation formulae are also included in the present example.

Example 2

In the present example, a description will be made of an example in which, when N is an integer of 3 or greater, among N continuously arranged wind power generators extracted from wind power generators which are arranged nearly in parallel to a direction similar to a wind direction, determination of running and stoppage of a wind power generator interposed between a wind power generator provided on the most windward side and a wind power generator provided on the most leeward side is performed so that an output of the wind farm is increased, and the wind farm is operated on the basis of this determination.

In the present example, among the N continuously arranged wind power generators, the wind power generator provided on the most windward side is simply referred to as a wind power generator (windward), the wind power generator provided on the most leeward side is simply referred to as a wind power generator (leeward), and the wind power generator of which determination of running and stoppage is performed is simply referred to as a wind power generator (state). Here, the wind power generator (windward) and the wind power generator (leeward) are in a run state. In a case where there are a plurality of wind power generators (state), and the wind power generators (state) are required to be differentiated from each other, the wind power generators (state) are differentiated from each other by adding numbers subsequently to states in order from the wind power generator (state) provided on the windward side among the wind power generators (state).

For example, in a case where there are two wind power generators (state), the wind power generators (state) are a wind power generator (state1) and a wind power generator (state2) in this order from a windward wind power generator (state). In the present example, a description of a slipstream wind speed evaluation formula overlaps the description in Example 1 and thus will not be repeated.

Fig. 5 illustrates an example of a wind farm used for description of the present example. The wind farm illustrated in Fig. 5 is constituted of six wind power generators which are defined as a wind power generator 211, a wind power generator 212, a wind power generator 213, a wind power generator 214, a wind power generator 215, and a wind power generator 216 in this order from the left side. The wind is directed from the left to the right as indicated by an arrow in Fig. 5, and a wind speed is indicated by U.

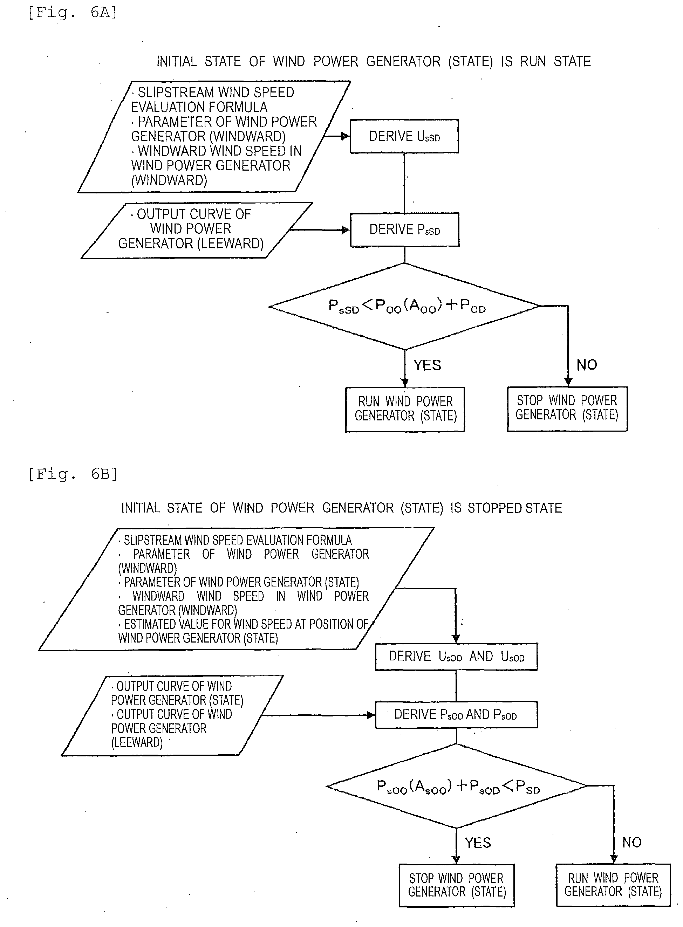

Figs. 6A and 6B are diagrams illustrating examples of methods of determining running and stoppage of a wind power generator (state) interposed between a wind power generator (windward) and a wind power generator (leeward). As illustrated in Figs. 6A and 6B, determination of running and stoppage of the wind power generator (state) is performed so as to be divided into cases where an initial state of the wind power generator (state) is a run state (Fig. 6A) and a stopped state (Fig. 6B).

First, a description will be made of a method of determining running and stoppage of the wind power generator (state) so that an output of the wind farm is increased in a case where an initial state of the wind power generator (state) is a run state.

As illustrated in Fig. 6A, first, in a case where the wind power generator (state) is assumed to be stopped among the N continuously arranged wind power generators which have been extracted, an estimated value $U_{sSD}$ for a wind speed at the position of the wind power generator (leeward) is obtained. This corresponds to a case where, for example, in Fig. 5, when the wind power generator 211, the wind power generator 212, the wind power generator 213, and the wind power generator 214 are extracted as the continuously arranged wind power generators, since the wind power generator 212 and the wind power generator 213 are wind power generators (state), and the wind power generator 214 is a wind power generator (leeward), among the four wind power generators, an estimated value for a wind speed at the position of the wind power generator 214 when the wind power generator 212 and the wind power generator 213 are assumed to be stopped is obtained.

$U_{sSD}$ is obtained by assigning a parameter of the wind power generator (windward), a windward wind speed in the wind power generator (windward), or the like to a slipstream wind speed evaluation formula. A windward wind speed in the wind power generator (windward) is obtained through measurement, but if there is no function of measuring a windward wind speed in the wind power generator (windward), the windward wind speed in the wind power generator (windward) is obtained on the basis of an output of the wind power generator (windward) and an output curve of the wind power generator (windward). Here, the output curve is a curve indicating a relationship between a windward wind speed in the wind power generator and an output of the wind power generator.

This corresponds to a case where, for example, in Fig. 5, when the wind power generator 211, the wind power generator 212, the wind power generator 213, and the wind power generator 214 are extracted as the continuously arranged wind power generators, an estimated value for wind speed at the position of the wind power generator 214 by assigning a parameter of the wind power generator 211, a windward wind speed in the wind power generator 211, or the like to the slipstream wind speed evaluation formula is obtained.

After $U_{sSD}$ is obtained, an estimated value $P_{sSD}$ for an output of the wind power generator (leeward) is obtained on the basis of $U_{sSD}$ and the output curve of the wind power generator (leeward). This corresponds to a case where, for example, in Fig. 5, when the wind power generator 211, the wind power generator 212, the wind power generator 213, and the wind power generator 214 are extracted as the continuously arranged wind power generators, an estimated value for an output of the wind power generator 214 is obtained on the basis of the estimated value for the wind speed at the position of the wind power generator 214 and the output curve of the wind power generator 214.

After $P_{SSD}$ is obtained, $P_{SSD}$ is compared with a sum of the output Poo of the wind power generator (state) when the wind power generator (state) is being run and the output $P_{OD}$ of the wind power generator (leeward) when the wind power generator (state) is being run. In a case where there are a plurality of wind power generators (state), Aoo is used as a sum of outputs of all of the wind power generators (state) instead of Poo. As a result of the comparison, if $P_{SSD}$ is smaller, the wind power generator (state) is maintained in a run state, and if $P_{SSD}$ is larger, the wind power generator (state) is stopped.

For example, in Fig. 5, when the wind power generator 211, the wind power generator 212, the wind power generator 213, and the wind power generator 214 are extracted as the continuously arranged wind power generators, the estimated value (corresponding to $P_{sSD}$) for the output of the wind power generator 214 when the wind power generator 212 and the wind power generator 213 are assumed to be stopped is compared with a sum of the sum (corresponding to Aoo) of the output of the wind power generator 212 and the output of the wind power generator 213 when the wind power generator 212 and the wind power generator 213 are being run, and the output (corresponding to $P_{OD}$) of the wind power generator 214 when the wind power generator 212 and the wind power generator 213 are being run.

As a result of the comparison, if the estimated value for the output of the wind power generator 214 is smaller, the wind power generator 212 and the wind power generator 213 are maintained in a run state, and if the estimated value for the output of the wind power generator 214 is larger, the wind power generator 212 and the wind power generator 213 are stopped.

In a case where an initial state of the wind power generator (state) is a run state, running and stoppage of the wind power generator (state) are determined according to the above-described method.

Next, a description will be made of a method of determining running and stoppage of the wind power generator (state) so that an output of the wind farm is increased in a case where an initial state of the wind power generator (state) is a stopped state.

As illustrated in Fig. 6B, first, in a case where the wind power generator (state) is assumed to be run among the N continuously arranged wind power generators which have been extracted, an estimated value $U_{soo}$ for a wind speed at the position of the wind power generator (state) and an estimated value $U_{sOD}$ for a wind speed at the position of the wind power generator (leeward) are obtained. In a case where there are a plurality of wind power generators (state), an estimated value for a wind speed at a position of each wind power generator (state) is obtained.

This corresponds to a case where, for example, in Fig. 5, when the wind power generator 211, the wind power generator 212, the wind power generator 213, and the wind power generator 214 are extracted as the continuously arranged wind power generators, since the wind power generator 212 and the wind power generator 213 are wind power generators (state), and the wind power generator 214 is a wind power generator (leeward), among the four wind power generators, an estimated value for a wind speed at the position of the wind power generator 212 when the wind power generator 212 and the wind power generator 213 are assumed to be run, an estimated value for a wind speed at the position of the wind power generator 213 when the wind power generator 212 and the wind power generator 213 are assumed to be run, and an estimated value for a wind speed at the position of the wind power generator 214 when the wind power generator 212 and the wind power generator 213 are assumed to be run, are obtained.

$U_{sOO}$ and $U_{sOD}$ are obtained by assigning a parameter of the wind power generator (windward), a windward wind speed in the wind power generator (windward), or the like, or a parameter of the wind power generator (state), the estimated value for the wind speed for the position of the wind power generator (state), or the like to the slipstream wind speed evaluation formula. In a case where there is a single wind power generator (state), the estimated value $U_{sOO}$ for the wind speed at the position of the wind power generator (state) is obtained by assigning the parameter of the wind power generator (windward), the windward wind speed in the wind power generator (windward), or the like to the slipstream wind speed evaluation formula, and the estimated value $U_{sOD}$ at the position of the wind power generator (leeward) is obtained by assigning the parameter of the wind power generator (state), $U_{sOO}$, or the like to the slipstream wind speed evaluation formula. A windward wind speed is obtained through measurement, but if there is no function of measuring a windward wind speed in the wind power generator (windward), the windward wind speed in the wind power generator (windward) is obtained on the basis of an output of the wind power generator (windward) and an output curve of the wind power generator (windward).

In a case where there are a plurality of wind power generators (state), first, an estimated value $U_{sOO1}$ for a wind speed at the position of the wind power generator (state1) adjacent to the wind power generator (windward) is obtained by assigning the parameter of the wind power generator (windward), the windward wind speed in the wind power generator (windward), or the like to the slipstream wind speed evaluation formula, and an estimated value $U_{sOO2}$ for a wind speed at the position of the wind power generator (state2) is obtained by assigning a parameter of the wind power generator (state1), $U_{sOO1}$, or the like to the slipstream wind speed evaluation formula. This operation is repeatedly performed until an estimated value $U_{sOD}$ for a wind speed at the position of the wind power generator (leeward) is obtained.

This corresponds to a case where, for example, in Fig. 5, when the wind power generator 211, the wind power generator 212, the wind power generator 213, and the wind power generator 214 are extracted as the continuously arranged wind power generators, an estimated value for a wind speed at the position of the wind power generator 212 by assigning the parameter of the wind power generator 211, the windward wind speed in the wind power generator 211, or the like to the slipstream wind speed evaluation formula is obtained, an estimated value for a wind speed at the position of the wind power generator 213 by assigning the parameter of the wind power generator 212, the estimated value of the wind speed at the position of the wind power generator 212, or the like to the slipstream wind speed evaluation formula is obtained, and an estimated value for a wind speed at the position of the wind power generator 214 by assigning the parameter of the wind power generator 213, the estimated value of the wind speed at the position of the wind power generator 213, or the like to the slipstream wind speed evaluation formula is obtained.

After the estimated value for the wind speed at the position of each wind power generator (state) and the estimated value for the wind speed at the position of the wind power generator (leeward) are obtained, an estimated value $P_{sOO}$ for an output of the wind power generator (state) and an estimated value $P_{SOD}$ for an output of the wind power generator (leeward) are obtained on the basis of the estimated value for the wind speed at the position of each wind power generator and the output curve of each wind power generator.

This corresponds to a case where, for example, in Fig. 5, when the wind power generator 211, the wind power generator 212, the wind power generator 213, and the wind power generator 214 are extracted as the continuously arranged wind power generators, an estimated value for an output of the wind power generator 212 is obtained on the basis of the estimated value for the wind speed at the position of the wind power generator 212 and the output curve of the wind power generator 212, an estimated value for an output of the wind power generator 213 is obtained on the basis of the estimated value for the wind speed at the position of the wind power generator 213 and the output curve of the wind power generator 213, and an estimated value for an output of the wind power generator 214 is obtained on the basis of the estimated value for the wind speed at the position of the wind power generator 214 and the output curve of the wind power generator 214.

After $P_{soo}$ and $P_{sOD}$ are obtained, a sum of $P_{sOO}$ and $P_{sOD}$ is compared with an output $P_{SD}$ of the wind power generator (leeward) when the wind power generator (state) is in a stopped state. In a case where there are a plurality of wind power generators (state), $A_{sOO}$ is used as a sum of the estimated value of outputs of all of the wind power generators (state) instead of $P_{sOO}$. As a result of the comparison, if the sum of $P_{sOO}$ ($A_{sOO}$) and $P_{sOD}$ is smaller, the wind power generator (state) is maintained in a stopped state, and if the sum of $P_{sOO}$ ($A_{sOO}$) and $P_{sOD}$ is larger, the wind power generator (state) is run.

For example, in Fig. 5, when the wind power generator 211, the wind power generator 212, the wind power generator 213, and the wind power generator 214 are extracted as the continuously arranged wind power generators, a sum of the sum (corresponding to $A_{sOO}$) of the estimated value for the output of the wind power generator 212 and the estimated value for the output of the wind power generator 213, and the estimated value (corresponding to $P_{sOD}$) for the output of the wind power generator 214, when the wind power generator 212 and the wind power generator 213 are assumed to be run, is compared with the output (corresponding to $P_{SD}$) of the wind power generator 214 when the wind power generator 212 and the wind power generator 213 are in a stopped state.

As a result of the comparison, if the sum of the sum of the estimated value for the output of the wind power generator 212 and the estimated value for the output of the wind power generator 213, and the estimated value for the output of the wind power generator 214 is smaller, the wind power generator 212 and the wind power generator 213 are maintained in a stopped state, and, if the sum of the sum of the estimated value for the output of the wind power generator 212 and the estimated value for the output of the wind power generator 213, and the estimated value for the output of the wind power generator 214 is larger, the wind power generator 212 and the wind power generator 213 are run.

In a case where an initial state of the wind power generator (state) is a stopped state, running and stoppage of the wind power generator (state) are determined according to the above-described method.

In the present example, running and stoppage of the wind power generator (state) are determined in real time according to the methods illustrated in Figs. 6A and 6B, and the wind farm is operated on the basis of this determination. As a result, it is possible to obtain an output larger than in a case where the wind power generator (state) is in a run state at all times, and the wind farm is operated. An output of the wind farm cannot be required to be obtained for all combinations of running and stoppage of the wind power generators in the wind farm unlike Example 1, and thus it is possible to simplify calculation more than in Example 1.

For better understanding of description, the present example has been described by using an example in which N is set to 4, and four wind power generators which are continuously arranged nearly in parallel to a direction similar to a wind direction are extracted, but examples in which N is set to other integers of 3 or greater are also included in the present example.

Example 3

In the present example, a description will be made of an example in which, when N and M are integers of 3 or greater, among N continuously arranged wind power generators extracted from wind power generators which are arranged nearly in parallel to a direction similar to a wind direction, determination of running and stoppage of a wind power generator interposed between a wind power generator provided on the most windward side and a wind power generator provided on the most leeward side is performed so that an output of the wind farm is increased, and this operation is also further performed on a set of M continuously arranged wind power generators extracted from other wind power generators which are arranged nearly in parallel to the direction similar to the wind direction so that the wind farm is operated on the basis of such an operation.

In other words, the present embodiment is an example in which the operation performed on a set of N continuously arranged wind power generators, described in Example 2, is also performed for another set of M continuously arranged wind power generators, and the wind farm is operated on the basis of such an operation. Extraction of sets of continuously arranged wind power generators is not limited to a case of extracting two sets, and a case of extracting three or more sets is also included in the present example.

In the present example, in the extracted sets of wind power generators, the wind power generator provided on the most windward side is simply referred to as a wind power generator (windward), the wind power generator provided on the most leeward side is simply referred to as a wind power generator (leeward), and the wind power generator of which determination of running and stoppage is performed is simply referred to as a wind power generator (state). Here, the wind power generator (windward) and the wind power generator (leeward) are in a run state.

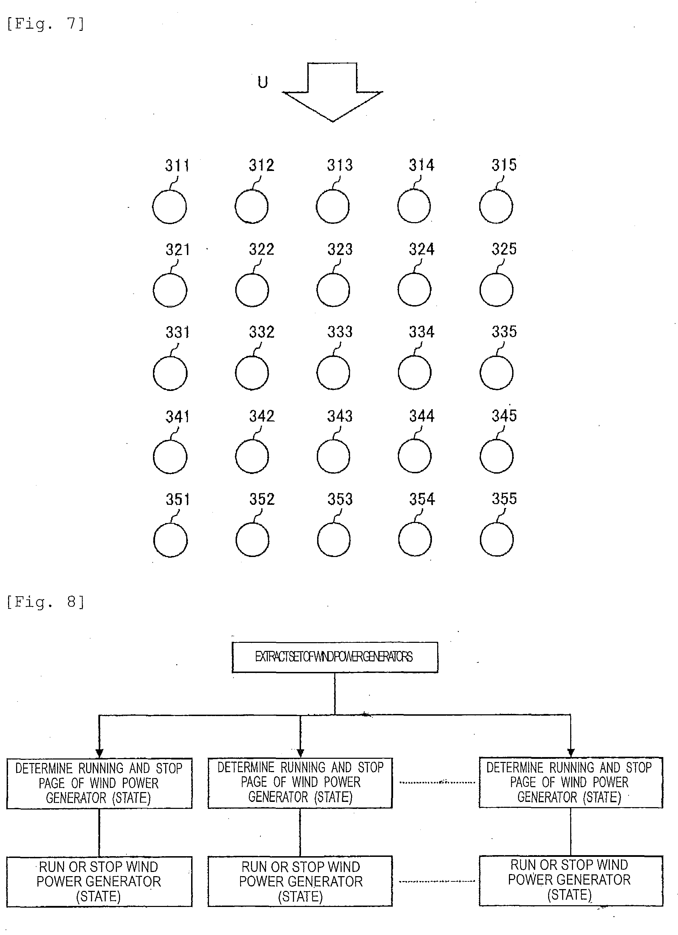

Fig. 7 illustrates an example of a wind farm used for description of the present example. The wind farm illustrated in Fig. 7 is constituted of 25 wind power generators. The upper wind power generators are defined as a wind power generator 311, a wind power generator 312, a wind power generator 313, a wind power generator 314, and a wind power generator 315 in this order from the left. The wind power generators in the second row from the top are defined as a wind power generator 321, a wind power generator 322, a wind power generator 323, a wind power generator 324, and a wind power generator 325 in this order from the left. The wind power generators in the third row from the top are defined as a wind power generator 331, a wind power generator 332, a wind power generator 333, a wind power generator 334, and a wind power generator 335 in this order from the left. The wind power generators in the fourth row from the top are defined as a wind power generator 341, a wind power generator 342, a wind power generator 343, a wind power generator 344, and a wind power generator 345 in this order from the left. The wind power generators in the fifth row from the top are defined as a wind power generator 351, a wind power generator 352, a wind power generator 353, a wind power generator 354, and a wind power generator 355 in this order from the left. The wind is directed downwardly from the top as in an arrow illustrated in Fig. 7, and a wind speed is indicated by U.

Fig. 8 is a diagram illustrating an example of a method of determining running and stoppage of a wind power generator (state) in a case where there are a plurality of sets of wind power generators. A description of determination of running and stoppage of the wind power generator (state) of each set overlaps the description in Example 2, and thus will not be repeated.

First, a set of N wind power generators which are continuously arranged nearly in parallel to a direction similar to the wind direction is extracted, and determination of running and stoppage of the wind power generator (state) is performed on the set according to the method described in Example 2. Next, another set is extracted, and determination of running and stoppage of the wind power generator (state) is also performed on the set according to the method described in Example 2. Similarly, extraction of a set of wind power generators and determination of running and stoppage of the wind power generator (state) are repeatedly performed.

As an example, a description will be made by using the wind farm illustrated in Fig. 7. For example, in a case where a set of three wind power generators including the wind power generator 311, the wind power generator 321, and the wind power generator 331, a set of three wind power generators including the wind power generator 331, the wind power generator 341, and the wind power generator 351, a set of four wind power generators including the wind power generator 312, the wind power generator 322, the wind power generator 332, and the wind power generator 342, a set of five wind power generators including the wind power generator 313, the wind power generator 323, the wind power generator 333, the wind power generator 343, and the wind power generator 353, a set of four wind power generators including the wind power generator 314, the wind power generator 324, the wind power generator 334, and the wind power generator 344, a set of three wind power generators including the wind power generator 315, the wind power generator 325, and the wind power generator 335, and a set of three wind power generators including the wind power generator 335, the wind power generator 345, and the wind power generator 355 are extracted, determination of running and stoppage of the wind power generator 321, determination of running and stoppage of the wind power generator 341, determination of running and stoppage of the wind power generator 322 and the wind power generator 332, determination of running and stoppage of the wind power generator 323, the wind power generator 333, and the wind power generator 343, determination of running and stoppage of the wind power generator 324 and the wind power generator 334, determination of running and stoppage of the wind power generator 325, and determination of running and stoppage of the wind power generator 345 are performed according to the method described in Example 2.

Here, an description has been made of an example in which the seven sets (four sets each including three wind power generators, two sets each including four wind power generators, and one set including five wind power generators) are extracted, and determination of running and stoppage of the wind power generator (state) is performed on each set according to the method described in Example 2, but other examples of the number of extracted sets or the number of wind power generators included in an extracted set are also included in the present example.

In the present example, determination of running and stoppage of the wind power generator (state) of each extracted set is performed in real time according to a method illustrated in Fig. 8, and the wind farm is operated on the basis of this determination. As a result, it is possible to obtain an output larger than in a case where the wind power generator (state) is in a run state at all times, and the wind farm is operated. Unlike Example 2, in the present example, determination of running and stoppage of the wind power generator (state) is performed on a plurality of sets, and thus it is possible to obtain an output larger than in Example 2. An output of the wind farm cannot be required to be obtained for all combinations of running and stoppage of the wind power generators in the wind farm unlike Example 1, and thus it is possible to simplify calculation more than in Example 1.

Example 4

In the present example, a description will be made of an example in which, among wind power generators which are arranged nearly in parallel to a direction similar to a wind direction, determination of running and stoppage of a wind power generator interposed between a wind power generator provided on the most windward side and a wind power generator provided on the most leeward side is performed so that an output of the wind farm is increased, and the wind farm is operated on the basis of this determination. In other words, the present example is an example in which N in Example 2 is the same as the number of wind power generators which are arranged nearly in parallel to the direction similar to the wind direction.

In the present example, among the wind power generators which are arranged nearly in parallel to the direction similar to the wind direction, the wind power generator provided on the most windward side is simply referred to as a wind power generator (windward), the wind power generator provided on the most leeward side is simply referred to as a wind power generator (leeward), and the wind power generator of which determination of running and stoppage is performed is simply referred to as a wind power generator (state). Here, the wind power generator (windward) and the wind power generator (leeward) are in a run state.

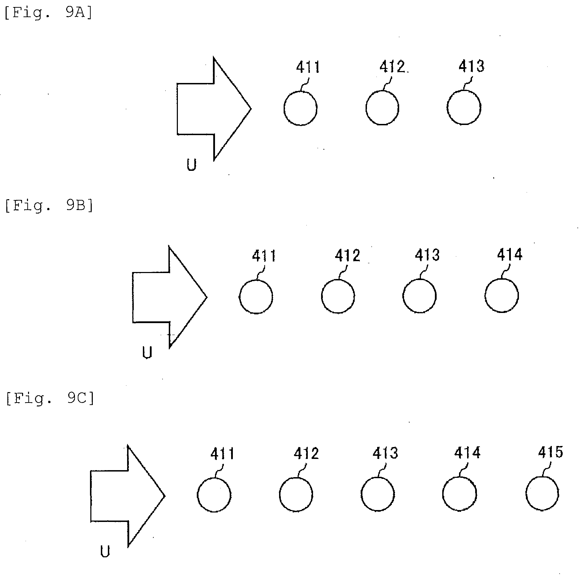

Figs. 9A, 9B and 9C illustrate examples of wind farms used for the present example. The wind is directed from the left to the right as indicated by an arrow in the figures, and a wind speed is indicated by U. In the wind farm illustrated in Fig. 9A, the wind power generator (windward) is a wind power generator 411, the wind power generator (state) is a wind power generator 412, and the wind power generator (leeward) is a wind power generator 413. In the wind farm illustrated in Fig. 9B, the wind power generator (windward) is a wind power generator 411, the wind power generators (state) are a wind power generator 412 and a wind power generator 413, and the wind power generator (leeward) is a wind power generator 414. In the wind farm illustrated in Fig. 9C, the wind power generator (windward) is a wind power generator 411, the wind power generators (state) are a wind power generator 412, a wind power generator 413, and a wind power generator 414, and the wind power generator (leeward) is a wind power generator 415.

In the present example, determination of running and stoppage of the wind power generator (state) is performed according to the method described in Example 2, and the wind farm is operated on the basis of this determination. A description of determination of running and stoppage of the wind power generator (state) overlaps the description in Example 2, and thus will not be repeated.

A difference between Example 2 and the present example is that several continuously arranged wind power generators extracted from wind power generators which are arranged nearly in parallel to a wind direction are targeted in Example 2, but, in the present example, all the wind power generators arranged nearly in parallel to the wind direction are targeted. As a result, in the present example, it is possible to restrict the number of sets of target wind power generators more than in Example 2.

For example, regarding a method of selecting a set of wind power generators in the wind farm illustrated in Fig.

9B, in Example 2, three sets are selected including a set of the wind power generator 411, the wind power generator 412, and the wind power generator 413, a set of the wind power generator 412, the wind power generator 413, and the wind power generator 414, and a set of the wind power generator 411, the wind power generator 412, the wind power generator 413, and the wind power generator 414, but, in the present example, a single set is selected including a set of the wind power generator 411, the wind power generator 412, the wind power generator 413, and the wind power generator 414. Therefore, in a case where an algorithm is created by taking into consideration a method of selecting a set of wind power generators, in the present example, the number of sets of wind power generators can be restricted, and thus it is possible to simplify calculation more than in Example 2.

In the present example, in the same manner as in Example 2, running and stoppage of the wind power generator (state) are determined in real time, and the wind farm is operated on the basis of this determination. As a result, it is possible to obtain an output larger than in a case where the wind power generator (state) is in a run state at all times, and the wind farm is operated. An output of the wind farm cannot be required to be obtained for all combinations of running and stoppage of the wind power generators in the wind farm unlike Example 1, and thus it is possible to simplify calculation more than in Example 1.

Example 5

In the present example, a description will be made of an example in which, among wind power generators which are arranged nearly in parallel to a direction similar to a wind direction, determination of running and stoppage of a wind power generator interposed between a wind power generator provided on the most windward side and a wind power generator provided on the most leeward side is performed so that an output of the wind farm is increased, and this operation is also further performed on a set of other wind power generators which are arranged nearly in parallel to the direction similar to the wind direction so that the wind farm is operated on the basis of such an operation. In other words, the present example is an example in which the operation performed on a set of wind power generators described in Example 4 is performed on other sets of wind power generators, and the wind farm is operated on the basis of such an operation.

The present example is an example in which N in Example 3 is the same as the number of wind power generators which are arranged nearly in parallel to the direction similar to the wind direction. In the present example, among the wind power generators which are arranged nearly in parallel to the direction similar to the wind direction, the wind power generator provided on the most windward side is simply referred to as a wind power generator (windward), the wind power generator provided on the most leeward side is simply referred to as a wind power generator (leeward), and the wind power generator of which determination of running and stoppage is performed is simply referred to as a wind power generator (state). Here, the wind power generator (windward) and the wind power generator (leeward) are in a run state.

The present example will be described by using the wind farm illustrated in Fig. 1A in example 1 as an example. A description of Fig. 1A overlaps the description in Example 1 and thus will not be repeated.

Determination of running and stoppage of the wind power generator (state) is performed on a set of wind power generators which are arranged nearly in parallel to a direction similar to a wind direction according to the method described in Example 2. A description of determination of running and stoppage of the wind power generator (state) overlaps the description in Example 2 and thus will not be repeated.

This corresponds to a case where, for example, in the wind farm illustrated in Fig. 1A, determination of running and stoppage of the wind power generator (state) is performed on four sets including a set of the wind power generator 111, the wind power generator 121, the wind power generator 131, and the wind power generator 141, a set of the wind power generator 112, the wind power generator 122, the wind power generator 132, and the wind power generator 142, a set of the wind power generator 113, the wind power generator 123, the wind power generator 133, and the wind power generator 143, and a set of wind power generator 114, the wind power generator 124, the wind power generator 134, and the wind power generator 144 according to the method described in Example 2.

In the wind farm illustrated in Fig. 1A, the wind power generators (windward) are the wind power generator 111, the wind power generator 112, the wind power generator 113, and the wind power generator 114. The wind power generators (state) are the wind power generator 121, the wind power generator 122, the wind power generator 123, the wind power generator 124, the wind power generator 131, the wind power generator 132, the wind power generator 133, and the wind power generator 134. The wind power generators (leeward) are the wind power generator 141, the wind power generator 142, the wind power generator 143, and the wind power generator 144. Here, a description is made of an example of using the method described in Example 2 for the four sets (four sets each including four wind power generators), but an example in which the number of sets or the number of wind power generators included in a set is different is also included in the present example.

A difference between Example 3 and the present example is that several continuously arranged wind power generators extracted from wind power generators which are arranged nearly in parallel to a wind direction are targeted in Example 3, and, in the present example, sets of all the wind power generators arranged nearly in parallel to the wind direction are targeted. As a result, in the present example, it is possible to restrict the number of sets of target wind power generators more than in Example 3.

For example, regarding a method of selecting a set of wind power generators in the wind farm illustrated in Fig. 1A, in Example 3, twelve sets are selected including a set of the wind power generator 111, the wind power generator 112, and the wind power generator 113, a set of the wind power generator 112, the wind power generator 113, and the wind power generator 114, a set of the wind power generator 111, the wind power generator 112, the wind power generator 113, and the wind power generator 114, a set of the wind power generator 121, the wind power generator 122, and the wind power generator 123, a set of the wind power generator 122, the wind power generator 123, and the wind power generator 124, a set of the wind power generator 121, the wind power generator 122, the wind power generator 123, and the wind power generator 124, a set of the wind power generator 131, the wind power generator 132, and the wind power generator 133, a set of the wind power generator 132, the wind power generator 133, and the wind power generator 134, a set of the wind power generator 131, the wind power generator 132, the wind power generator 133, and the wind power generator 134, a set of the wind power generator 141, the wind power generator 142, and the wind power generator 143, a set of the wind power generator 142, the wind power generator 143, and the wind power generator 144, a set of the wind power generator 141, the wind power generator 142, and the wind power generator 143, and the wind power generator 144. In the present example, four sets are selected including a set of the wind power generator 111, the wind power generator 112, the wind power generator 113, and the wind power generator 114, a set of the wind power generator 121, the wind power generator 122, the wind power generator 123, and the wind power generator 124, a set of the wind power generator 131, the wind power generator 132, the wind power generator 133, and the wind power generator 134, and a set of the wind power generator 141, the wind power generator 142, and the wind power generator 143, and the wind power generator 144.

Therefore, in a case where an algorithm is created by taking into consideration a method of selecting a set of wind power generators, in the present example, the number of sets of wind power generators can be restricted, and thus it is possible to simplify calculation more than in Example 3.

In the present example, in the same manner as in Example 3, running and stoppage of the wind power generator (state) are determined in real time, and the wind farm is operated on the basis of this determination. As a result, it is possible to obtain an output larger than in a case where the wind power generator (state) is in a run state at all times, and the wind farm is operated.

Unlike Example 4, in the present example, determination of running and stoppage of the wind power generator (state) is performed on a plurality of sets, and thus it is possible to obtain an output larger than in Example 4. An output of the wind farm cannot be required to be obtained for all combinations of running and stoppage of the wind power generators in the wind farm unlike Example 1, and thus it is possible to simplify calculation more than in Example 1.

Example 6

In the present example, a description will be made of a specific configuration example of devices which control the wind farm operated on the basis of determination of running and stoppage of the wind power generator described in Example 1. In the present example, a description of a slipstream wind speed evaluation formula overlaps the description in Example 1 and thus will not be repeated.

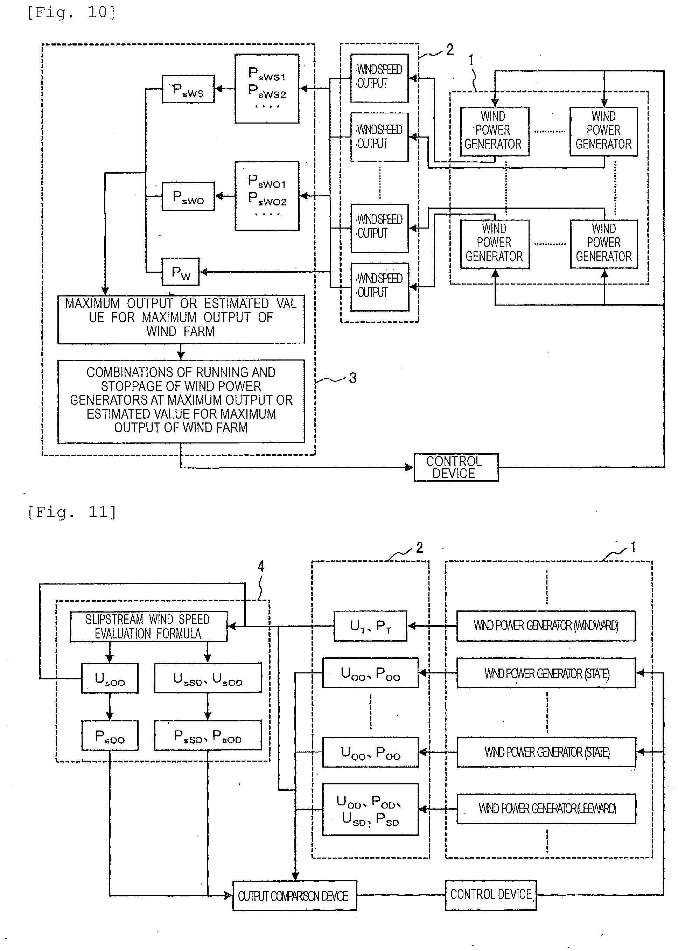

Fig. 10 illustrates the entire summary of devices which control the wind farm operated on the basis of combination of running and stoppage of the wind power generator described in Example 1. A wind farm 1 is constituted of a plurality of wind power generators, and wind speed data and output data of each wind power generator are transmitted to a display device 2. The display device 2 displays the transmitted wind speed data and output data of each wind power generator, and transmits necessary wind speed data and output data to a combination determining device 3.

The combination determining device 3 obtains an estimated value for an output of the wind farm when a currently running wind power generator is assumed to be stopped or an estimated value for an output of the wind farm when a currently stopped wind power generator is assumed to be run, by using the transmitted wind speed data of the wind power generator, a slipstream wind speed evaluation formula, or the like. The maximum output or an estimated value for the maximum output is extracted from an estimated value ($P_{sWS}$ or $P_{sWO}$) for the maximum output of the estimated values for the outputs of the wind farm obtained here, and the present output $P_W$ of the wind farm, and combinations of running and stoppage of the wind power generators are obtained. In addition, information regarding the combinations of running and stoppage of the wind power generators obtained by the combination determining device 3 is transmitted to the control device.

The control device converts the transmitted information regarding the combinations of running and stoppage of the wind power generators into a signal to be transmitted to each wind power generator, and transmits the signal to the wind farm 1. The wind power generator of the wind farm 1 is run and stopped on the basis of the signal.

Therefore, the present devices can control the wind power generators in the wind farm so that an output of the wind farm is the maximum.

Example 7

In the present example, a description will be made of a specific configuration example of devices which control the wind farm operated on the basis of determination of running and stoppage of the wind power generator described in Examples 2 to 5. In the present example, among target wind power generators, a wind power generator provided on the most windward side is simply referred to as a wind power generator (windward), a wind power generator provided on the most leeward side is simply referred to as a wind power generator (leeward), and a wind power generator of which determination of running and stoppage is performed is simply referred to as a wind power generator (state). In the present example, a description of a slipstream wind speed evaluation formula overlaps the description in Example 1 and thus will not be repeated.

Fig. 11 illustrates the entire summary of devices which control the wind farm operated on the basis of determination of running and stoppage of the wind power generator (state) described in Examples 2 to 5. A wind farm 1 is constituted of a plurality of wind power generators, and wind speed data and output data of each wind power generator are transmitted to a display device 2. The display device 2 displays the transmitted wind speed data and output data of each wind power generator, and transmits necessary wind speed data and output data in the data to an output estimation device 4 and an output comparison device.

The output estimation device 4 assigns the transmitted wind speed data of the wind power generator to a slipstream wind speed evaluation formula so as to obtain estimated values for a wind speed in a leeward wind power generator (a wind power generator (state) and a wind power generator (leeward)), and obtains estimated values for an output of the leeward wind power generator by using an output curve of the leeward wind power generator. In a case where there is no wind speed data in the display device 2, wind speed data converted by using the output data displayed on the display device 2 and the output curve is used. In a case where there are a plurality of leeward wind power generators, an estimated value for a wind speed at a position of a more leeward wind power generator is obtained by assigning derived $U_{sOO}$ to the slipstream wind speed evaluation formula, and an estimated value for an output of the leeward wind power generator is obtained by using the-output curve of the leeward wind power generator.

Data regarding the estimated value for the output obtained by the output estimation device 4 is transmitted to the output comparison device. The output comparison device compares data items with each other by using necessary output data and data regarding the estimated value for the output in the data regarding the estimated value for the output transmitted from the output estimation device 4 and the output data transmitted from the display device 2, and determines of running and stoppage of a wind power generator (state). More specifically, comparison is performed between two or more output data items or estimated values for outputs among output data items of respective wind power generators including wind power generators (windward), wind power generators (leeward), and wind power generators (state), or total values of output data items of combinations thereof, or estimated values for outputs of the wind power generators (leeward) and wind power generators (state) or total values of the estimated values for the outputs, and thus determination (judgment) of running and stoppage of the wind power generator (state) is performed.

A result of the determination here is transmitted to the control device. The control device converts the result of the determination (judgment) of running and stoppage of the wind power generator (state) transmitted from the output comparison device into a signal to be transmitted to each wind power generator (state), and transmits the signal to the wind farm 1. The wind power generator (state) of the wind farm 1 is run and stopped on the basis of the signal.

Therefore, the present devices can control the wind power generators in the wind farm so that an output of the wind farm is the maximum.

Example 8

In the present example, a description will be made of an example in which operations of running and stopping the wind power generators described in Examples 1 to 5 are performed according to yaw control (control on a rotation plane of the wind turbine rotor relative to a wind direction) on the wind power generators.

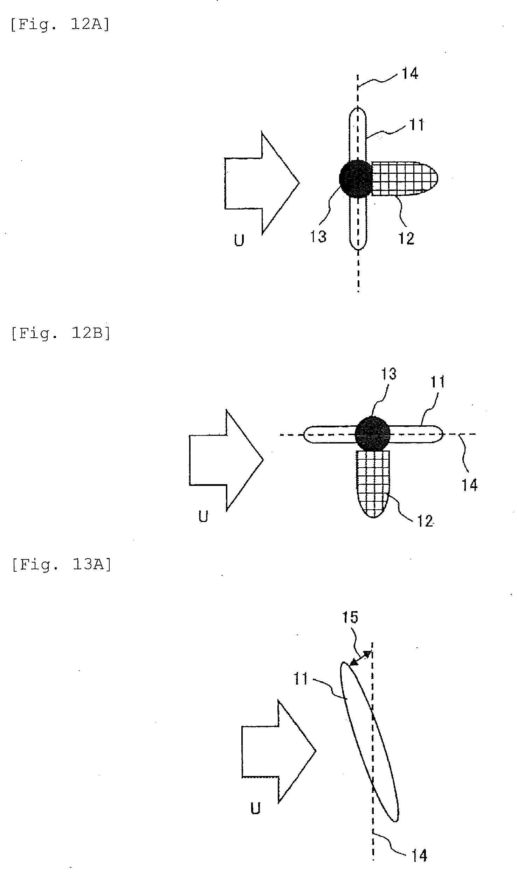

Figs. 12A and 12B illustrate examples of views in which the wind power generator is viewed from the top. In Figs. 12A and 12B, the wind is directed from the left to the right as in an arrow, and a blade 11, a nacelle 12, and a hub 13 are illustrated in order to describe yaw control in the wind power generator. In the yaw control, the blade 11, the nacelle 12, and the hub 13 are rotated so that the influence which the wind power generator receives from the wind is controlled. Generally, the yaw control is performed so that a rotation plane 14 of a wind turbine rotor is perpendicular to a wind direction at all times with respect to a change in the wind direction. However, in the present example, in addition to performing control so that the rotation plane 14 of the wind turbine rotor is perpendicular to a wind direction, control is performed so that the rotation plane 14 of the wind turbine rotor is parallel to the wind direction, and thus the wind power generator is run and stopped.

Fig. 12A is a diagram illustrating an example in which yaw control is performed on the wind power generator when the wind power generator is run. When the wind power generator is run, as illustrated in Fig. 12A, control is performed so that the rotation plane 14 of the wind turbine rotor is perpendicular to the wind direction at all times. On the other hand, Fig. 12B is a diagram illustrating an example in which yaw control is performed on the wind power generator when the wind power generator is stopped. When the wind power generator is stopped, as illustrated in Fig. 12B, control is performed so that the rotation plane 14 of the wind turbine rotor is parallel to the wind direction at all times.

The yaw control is performed as in the present example, and thus it is possible to run and stop the wind power generator described in Examples 1 to 5.

Example 9

In the present example, a description will be made of an example in which operations of running and stopping the wind power generators described in Examples 1 to 5 are performed according to pitch control (control on an installation angle of a blade) on the wind power generators.

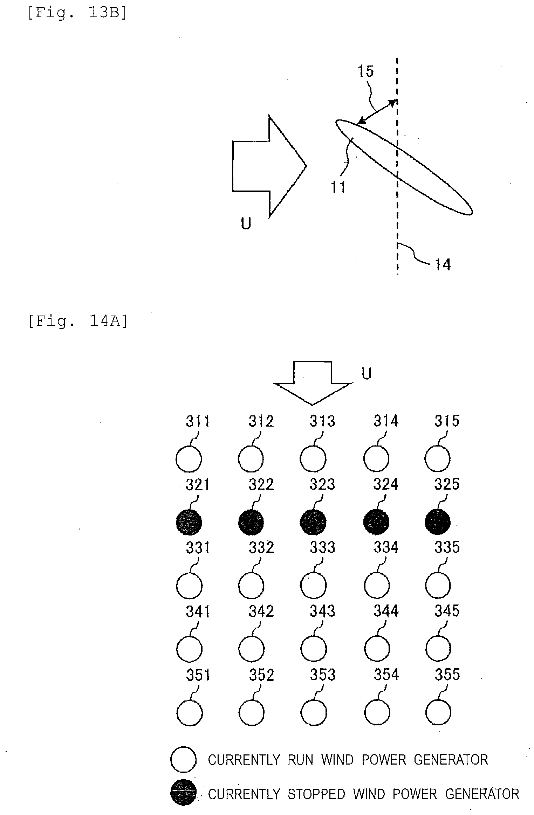

Figs. 13A and 13B illustrate examples of views in which a section of the blade 11 is viewed from a tip end of the blade 11 in the direction of the hub 13 in Fig. 12A or 12B. In Figs. 13A and 13B, the wind is directed from the left to the right as in an arrow, and only the blade 11 is illustrated in order to describe pitch control in the wind power generator. Generally, in pitch control, the magnitude of a pitch angle 15 (blade installation angle) which is an angle between the blade 11 and the rotation plane 14 of the wind turbine rotor is adjusted according to a change in a wind speed, and thus a rotation speed of the wind turbine rotor of the wind power generator is controlled. However, in pitch control of the present example, the wind power generator is run and stopped by adjusting the magnitude of a pitch angle.

Fig. 13A is a diagram illustrating an example in which the pitch control is performed on the wind power generator when the wind power generator is run. When the wind power generator is run, as illustrated in Fig. 13A, control is performed so that the pitch angle 15 decreases. On the other hand, Fig. 13B is a diagram illustrating an example in which the pitch control is performed on the wind power generator when the wind power generator is stopped. When the wind power generator is stopped, as illustrated in Fig. 13B, control is performed so that the pitch angle 15-increases.

The pitch control is performed as in the present example, and thus it is possible to run and stop the wind power generator described in Examples 1 to 5. A switching time is shorter in the pitch control than in the yaw control, and thus it is possible to more rapidly correspond to a change in a wind direction than in the yaw control. A load received by the nacelle 12 from the wind when the wind power generator is stopped is smaller in the pitch control than in the yaw control.

Example 10

In the present example, a description will be made of an example in which control on the wind power generators in the wind farm described in Examples 1 to 5 is performed according to a change in a wind direction. In the present example, a wind power generator of which running and stoppage are determined is simply referred to as a wind power generator (state).

The present example will be described by using an example in which the wind farm illustrated in Fig. 7 is controlled according to the method described in Example 3. A description of Fig. 7 overlaps the description in Example 3 and thus will not be repeated. For better understanding of the description, it is assumed that, regarding extraction of a set of wind power generators arranged nearly in parallel to a direction similar to a wind direction, three wind power generators are extracted from windward wind power generators, and stoppage of a wind power generator (state) is determined when a wind speed is U.

First, as illustrated in Fig. 7, a description will be made of an operation of the wind farm when the wind is directed downwardly from the top, and a wind speed is U. In this case, a set of the wind power generator 311, the wind power generator 321, and the wind power generator 331, a set of the wind power generator 312, the wind power generator 322, and the wind power generator 332, a set of the wind power generator 313, the wind power generator 323, and the wind power generator 333, a set of the wind power generator 314, the wind power generator 324, and the wind power generator 334, and a set of the wind power generator 315, the wind power generator 325, and the wind power generator 335 are extracted, and stoppage of the wind power generator 321, the wind power generator 322, the wind power generator 323, the wind power generator 324, and the wind power generator 325 which are wind power generators (state) is determined. Fig. 14A illustrates an example in which the wind power generators (state) are stopped on the basis of this determination.

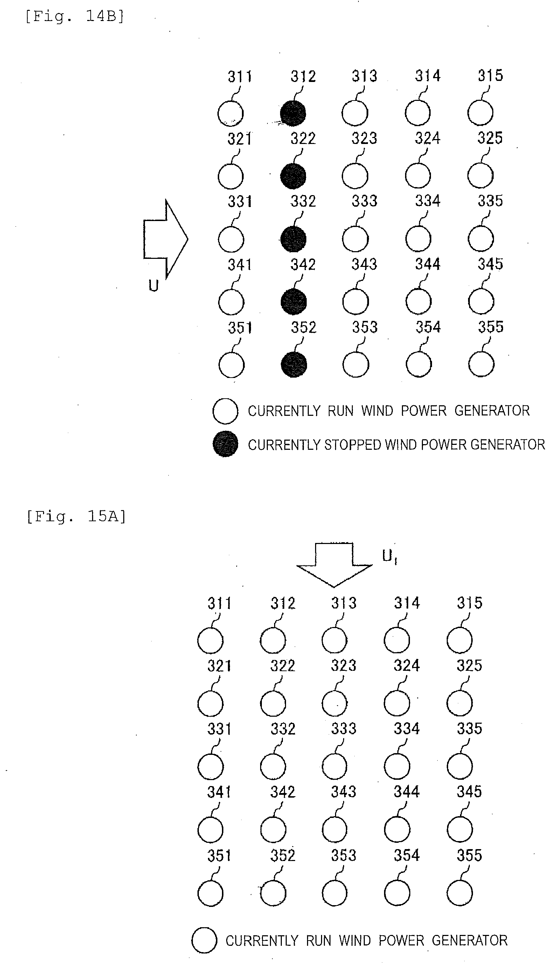

Next, a description will be made of an operation of the wind farm when the wind is directed from the left to the right, and a wind speed is U. In this case, a set of the wind power generator 311, the wind power generator 312, and the wind power generator 313, a set of the wind power generator 321, the wind power generator 322, and the wind power generator 323, a set of the wind power generator 331, the wind power generator 332, and the wind power generator 333, a set of the wind power generator 341, the wind power generator 342, and the wind power generator 343, and a set of the wind power generator 351, the wind power generator 352, and the wind power generator 353 are extracted, and stoppage of the wind power generator 312, the wind power generator 322, the wind power generator 332, the wind power generator 342, and the wind power generator 352 which are wind power generators (state) is determined. Fig. 14B illustrates an example in which the wind power generators (state) are stopped on the basis of this determination.

In the present example, running and stoppage of the wind power generator (state) are performed according to a change in a wind direction as described above. As a result, it is possible to obtain an output larger than in a case where the wind power generator (state) is in a run state at all times, and the wind farm is operated.

In the present example, an example in which all of the wind power generators (state) are stopped when a wind speed is U has been described, but examples in conditions other than the above-described condition, such as an example in which the wind power generator (state) is stopped according to other wind speeds or an example in which some of the wind power generators (state) are stopped, are also included in the present example.

In the present example, regarding extraction of a set of wind power generators arranged nearly in parallel to a direction similar to a wind direction, three wind power generators are extracted from windward wind power generators, but examples of extracting sets of wind power generators in other conditions are also included in the present example.

Example 11

In the present example, a description will be made of an example in which control on the wind power generators in the wind farm described in Examples 1 to 5 is performed according to a change in a wind speed. In the present example, a wind power generator of which running and stoppage are determined is simply referred to as a wind power generator (state).

The present example will be described by using an example in which the wind farm illustrated in Fig. 7 is controlled according to the method described in Example 3. A description of Fig. 7 overlaps the description in Example 3 and thus will not be repeated. For better understanding of the description, it is assumed that, regarding extraction of a set of wind power generators arranged nearly in parallel to a direction similar to a wind direction, three wind power generators are extracted from windward wind power generators, running of a wind power generator (state) is determined when a wind speed is $U_1$, and stoppage of a wind power generator (state) is determined when a wind speed is $U_2$.

First, a description will be made of an operation of the wind farm when the wind is directed downwardly from the top, and a wind speed is $U_1$. When the wind speed is $U_1$, a set of the wind power generator 311, the wind power generator 321, and the wind power generator 331, a set of the wind power generator 312, the wind power generator 322, and the wind power generator 332, a set of the wind power generator 313, the wind power generator 323, and the wind power generator 333, a set of the wind power generator 314, the wind power generator 324, and the wind power generator 334, and a set of the wind power generator 315, the wind power generator 325, and the wind power generator 335 are extracted, and running of the wind power generator 321, the wind power generator 322, the wind power generator 323, the wind power generator 324, and the wind power generator 325 which are wind power generators (state) is determined. Fig. 15A illustrates an example in which the wind power generators (state) are run on the basis of this determination.

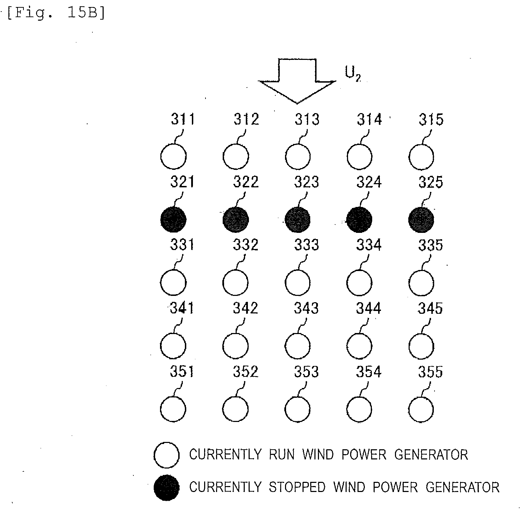

First, a description will be made of an operation of the wind farm when the wind is directed downwardly from the top, and a wind speed is $U_2$. When the wind speed is $U_2$, a set of the wind power generator 311, the wind power generator 321, and the wind power generator 331, a set of the wind power generator 312, the wind power generator 322, and the wind power generator 332, a set of the wind power generator 313, the wind power generator 323, and the wind power generator 333, a set of the wind power generator 314, the wind power generator 324, and the wind power generator 334, and a set of the wind power generator 315, the wind power generator 325, and the wind power generator 335 are extracted, and stoppage of the wind power generator 321, the wind power generator 322, the wind power generator 323, the wind power generator 324, and the wind power generator 325 which are wind power generators (state) is determined. Fig. 15B illustrates an example in which the wind power generators (state) are stopped on the basis of this determination.

In the present example, running and stoppage of the wind power generator (state) are performed according to a change in a wind speed as described above. As a result, it is possible to obtain an output larger than in a case where the wind power generator (state) is in a run state at all times, and the wind farm is operated.

In the present example, an example in which all of the wind power generators (state) are run when a wind speed is $U_1$, and all of the wind power generators (state) are stopped when a wind speed is $U_2$ has been described, but examples in conditions other than the above-described condition, such as an example in which running and stoppage are determined according to other wind speeds or an example in which some of the wind power generators (state) are stopped, are also included in the present example.

In the present example, regarding extraction of a set of wind power generators arranged nearly in parallel to a direction similar to a wind direction, three wind power generators are extracted from windward wind power generators, but examples of extracting sets of wind power generators in other conditions are also included in the present example.

The present invention is not limited to the above-described Examples and includes various modifications. For example, the above Examples have been described in detail for better understanding of the present invention, and are not necessarily limited to including all the configurations described above. Some configurations of certain Example may be replaced with configurations of other Examples, and the configurations of other Examples may be added to the configuration of certain Example. The configurations of other Examples may be added to, deleted from, and replaced with some of the configurations of each Example.

Reference Signs List

1 WIND FARM
2 DISPLAY DEVICE
3 COMBINATION DETERMINING DEVICE
4 OUTPUT ESTIMATION DEVICE
11 BLADE
12 NACELLE
13 HUB
14 ROTATION PLANE OF WIND TURBINE ROTOR
15 PITCH ANGLE
111 WIND POWER GENERATOR
112 WIND POWER GENERATOR
113 WIND POWER GENERATOR
114 WIND POWER GENERATOR
121 WIND POWER GENERATOR
122 WIND POWER GENERATOR
123 WIND POWER GENERATOR
124 WIND POWER GENERATOR
131 WIND POWER GENERATOR
132 WIND POWER GENERATOR
133 WIND POWER GENERATOR
134 WIND POWER GENERATOR
141 WIND POWER GENERATOR
142 WIND POWER GENERATOR
143 WIND POWER GENERATOR
144 WIND POWER GENERATOR
211 WIND POWER GENERATOR
212 WIND POWER GENERATOR
213 WIND POWER GENERATOR
214 WIND POWER GENERATOR
215 WIND POWER GENERATOR
216 WIND POWER GENERATOR
311 WIND POWER GENERATOR
312 WIND POWER GENERATOR
313 WIND POWER GENERATOR
314 WIND POWER GENERATOR
315 WIND POWER GENERATOR
321 WIND POWER GENERATOR
322 WIND POWER GENERATOR
323 WIND POWER GENERATOR
324 WIND POWER GENERATOR
325 WIND POWER GENERATOR
331 WIND POWER GENERATOR
332 WIND POWER GENERATOR
333 WIND POWER GENERATOR
334 WIND POWER GENERATOR
335 WIND POWER GENERATOR
341 WIND POWER GENERATOR
342 WIND POWER GENERATOR
343 WIND POWER GENERATOR

344 WIND POWER GENERATOR
345 WIND POWER GENERATOR
351 WIND POWER GENERATOR
352 WIND POWER GENERATOR
353 WIND POWER GENERATOR
354 WIND POWER GENERATOR
355 WIND POWER GENERATOR
411 WIND POWER GENERATOR
412 WIND POWER GENERATOR
413 WIND POWER GENERATOR
414 WIND POWER GENERATOR
415 WIND POWER GENERATOR
AOO SUM OF OUTPUTS OF ALL WIND POWER GENERATORS (STATE)
AsOO SUM OF ESTIMATED VALUES FOR OUTPUTS OF ALL WIND POWER GENERATORS (STATE)
$C_t$ THRUST COEFFICIENT OF WIND POWER GENERATOR PROVIDED ON WINDWARD SIDE
k SLIPSTREAM ATTENUATION COEFFICIENT
$P_T$ OUTPUT OF WIND POWER GENERATOR (WINDWARD)
Poo OUTPUT OF WIND POWER GENERATOR (STATE) WHEN WIND POWER GENERATOR (STATE) IS RUN
$P_{sOO}$ ESTIMATED VALUE FOR OUTPUT OF WIND POWER GENERATOR (STATE) WHEN WIND POWER GENERATOR (STATE) IS ASSUMED TO BE RUN
$P_{OD}$ OUTPUT OF WIND POWER GENERATOR (LEEWARD) WHEN WIND POWER GENERATOR (STATE) IS RUN
$P_{sOD}$ ESTIMATED VALUE FOR OUTPUT OF WIND POWER GENERATOR (LEEWARD) WHEN WIND POWER GENERATOR (STATE) IS ASSUMED TO BE RUN
$P_{SD}$ OUTPUT OF WIND POWER GENERATOR (LEEWARD) WHEN WIND POWER GENERATOR (STATE) IS STOPPED
$P_{sSD}$ ESTIMATED VALUE FOR OUTPUT OF WIND POWER GENERATOR (LEEWARD) WHEN WIND POWER GENERATOR (STATE) IS ASSUMED TO BE STOPPED
$P_W$ PRESENT OUTPUT OF WIND FARM
Psws ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED SEVERAL BY SEVERAL
$P_{sWS1}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED ONE BY ONE
$P_{sWS2}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED TWO BY TWO
$P_{sWS3}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED THREE BY THREE
$P_{sWS4}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED FOUR BY FOUR
$P_{sWS5}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED FIVE BY FIVE
$P_{sWS6}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED SIX BY SIX
$P_{sWS7}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED SEVEN BY SEVEN
$P_{sWS8}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED EIGHT BY EIGHT
$P_{sWS9}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED NINE BY NINE

$P_{sWS10}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED TEN BY TEN

$P_{sWS11}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED ELEVEN BY ELEVEN

$P_{sWS12}$ ESTIMATED VALUE FOR MAXIMUM OUTPUT AMONG ESTIMATED VALUES FOR OUTPUTS WHEN CURRENTLY RUNNING WIND POWER GENERATORS IN WIND FARM ARE ASSUMED TO BE STOPPED TWELVE BY TWELVE

$P_{sWO}$ ESTIMATED VALUE FOR MAXIMUM OUTPUT AMONG ESTIMATED VALUES FOR OUTPUTS WHEN CURRENTLY STOPPED WIND POWER GENERATORS IN WIND FARM ARE ASSUMED TO BE RUN SEVERAL BY SEVERAL

$P_{sWO1}$ ESTIMATED VALUE FOR MAXIMUM OUTPUT AMONG ESTIMATED VALUES FOR OUTPUTS WHEN CURRENTLY STOPPED WIND POWER GENERATORS IN WIND FARM ARE ASSUMED TO BE RUN ONE BY ONE

$P_{sWO2}$ ESTIMATED VALUE FOR MAXIMUM OUTPUT AMONG ESTIMATED VALUES FOR OUTPUTS WHEN CURRENTLY STOPPED WIND POWER GENERATORS IN WIND FARM ARE ASSUMED TO BE RUN TWO BY TWO

$P_{sWO3}$ ESTIMATED VALUE FOR MAXIMUM OUTPUT AMONG ESTIMATED VALUES FOR OUTPUTS WHEN CURRENTLY STOPPED WIND POWER GENERATORS IN WIND FARM ARE ASSUMED TO BE RUN THREE BY THREE

$P_{sWO4}$ ESTIMATED VALUE FOR MAXIMUM OUTPUT AMONG ESTIMATED VALUES FOR OUTPUTS WHEN CURRENTLY STOPPED WIND POWER GENERATORS IN WIND FARM ARE ASSUMED TO BE RUN FOUR BY FOUR

$r_0$ RADIUS OF WIND TURBINE ROTOR OF WIND POWER GENERATOR PROVIDED ON WINDWARD SIDE

U WIND SPEED

$U_0$ WINDWARD WIND SPEED OF WIND POWER GENERATOR PROVIDED ON WINDWARD SIDE

$U_1$ WIND SPEED AT WHICH RUNNING OF WIND POWER GENERATOR (STATE) IS DETERMINED

$U_2$ WIND SPEED AT WHICH STOPPAGE OF WIND POWER GENERATOR (STATE) IS DETERMINED

$U_T$ WINDWARD WIND SPEED IN WIND POWER GENERATOR (WINDWARD)

$U_{OO}$ WIND SPEED AT POSITION OF WIND POWER GENERATOR (STATE) WHEN WIND POWER GENERATOR (STATE) IS RUN

$U_{sOO}$ ESTIMATED VALUE FOR WIND SPEED AT POSITION OF WIND POWER GENERATOR (STATE) WHEN WIND POWER GENERATOR (STATE) IS ASSUMED TO BE RUN

$U_{sOO1}$ ESTIMATED VALUE FOR WIND SPEED AT POSITION OF WIND POWER GENERATOR (STATE1) WHEN WIND POWER GENERATOR (STATE) IS ASSUMED TO BE RUN

$U_{sOO2}$ ESTIMATED VALUE FOR WIND SPEED AT POSITION OF WIND POWER GENERATOR (STATE2) WHEN WIND POWER GENERATOR (STATE) IS ASSUMED TO BE RUN

$U_{OD}$ WIND SPEED AT POSITION OF WIND POWER GENERATOR (LEEWARD) WHEN WIND POWER GENERATOR (STATE) IS RUN

$U_{sOD}$ ESTIMATED VALUE FOR WIND SPEED AT POSITION OF WIND POWER GENERATOR (LEEWARD) WHEN WIND POWER GENERATOR (STATE) IS ASSUMED TO BE RUN

$U_{SD}$ WIND SPEED AT POSITION OF WIND POWER GENERATOR (LEEWARD) WHEN WIND POWER GENERATOR (STATE) IS STOPPED

$U_{sSD}$ ESTIMATED VALUE FOR WIND SPEED AT POSITION OF WIND POWER GENERATOR (LEEWARD) WHEN WIND POWER GENERATOR (STATE) IS ASSUMED TO BE STOPPED

$U_{wm1}$ SLIPSTREAM WIND SPEED OBTAINED FROM EQUATION 1

$U_{wm2}$ SLIPSTREAM WIND SPEED OBTAINED FROM EQUATION 2

$U_{wm3}$ SLIPSTREAM WIND SPEED OBTAINED FROM EQUATION 3

x DISTANCE BETWEEN WIND POWER GENERATOR PROVIDED ON WINDWARD SIDE AND WIND SPEED MEASUREMENT POINT

**Claims**

**1.** A control method for a wind farm constituted of a plurality of wind power generators disposed on land or on sea, the method comprising:

a step of measuring an output of the wind farm;

a step of calculating the number of wind power generators to be stopped which causes an estimated value for the output of the wind farm to be the maximum and positions thereof in the wind farm in a case where currently running wind power generators are stopped among the plurality of wind power generators; and

a step of calculating the number of wind power generators to be run which causes an estimated value for the output of the wind farm to be the maximum and positions thereof in the wind farm in a case where currently stopped wind power generators are run among the plurality of wind power generators,

wherein a wind power generator to be run or a wind power generator to be stopped is determined among the plurality of wind power generators of the wind farm so that an output value of the wind farm is the maximum, by comparing the measured output of the wind farm, the maximum value of the estimated value for the output of the wind farm in a case where the currently running wind power generator is stopped, and the maximum value of the estimated value for the output of the wind farm in a case where the currently stopped wind power generator is run with each other.

2. The control method for a wind farm according to claim 1,

wherein, in a case where the currently running wind power generator is stopped, an estimated value for a wind speed in another wind power generator adjacent on a leeward side of the wind power generator to be stopped is calculated by using at least one parameter among a windward wind speed in still another wind power generator adjacent on a windward side of the wind power generator to be stopped, a radius of a wind turbine rotor of still another wind power generator adjacent on the windward side of the wind power generator to be stopped, and a thrust coefficient of still another wind power generator adjacent on the windward side of the wind power generator to be stopped, and

wherein an estimated value for an output of another wind power generator adjacent on the leeward side of the wind power generator to be stopped is calculated on the basis of the estimated value for the wind speed in still another wind power generator adjacent on the leeward side of the wind power generator to be stopped, and thus an estimated value for an output of the entire wind farm is calculated.

3. The control method for a wind farm according to claim 1 or 2,

wherein, in a case where the currently stopped wind power generator is run, an estimated value for a wind speed in the wind power generator to be run is calculated by using at least one parameter among a windward wind speed in another wind power generator adjacent on a windward side of the wind power generator to be run, a radius of a wind turbine rotor of another wind power generator adjacent on the windward side of the wind power generator to be run, and a thrust coefficient of another wind power generator adjacent on the windward side of the wind power generator to be run,

wherein an estimated value for a wind speed in still another wind power generator adjacent on a leeward side of the wind power generator to be run is calculated by using at least one parameter among an estimated value for a wind speed in the wind power generator to be run, a radius of a wind turbine rotor of the wind power generator to be run, and a thrust coefficient of the wind power generator to be run, and

wherein an estimated value for an output of the wind power generator to be run and an estimated value for an output of still another wind power generator adjacent on the leeward side of the wind power generator to be run on the basis of the estimated value for the wind speed in the wind power generator to be run and the estimated value for the wind speed in still another wind power generator adjacent on the leeward side of the wind power generator to be run, and thus an estimated value for an output of the entire wind farm is calculated.

4. The control method for a wind farm according to any one of claims 1 to 3,

wherein, in the wind farm, at least a plurality of three or more wind power generators are arbitrarily extracted from a plurality of wind power generators which are arranged in a direction substantially parallel to a wind direction, and, among the plurality of extracted wind power generators, running or stoppage of a wind power generator interposed between a wind power generator provided on the most windward side and a wind power generator provided on the most leeward side is determined.

5. The control method for a wind farm according to claim 4,

wherein, in the wind farm, at least a plurality of three or more continuously arranged wind power generators are extracted from a plurality of wind power generators which are arranged in a direction substantially parallel to a wind direction.

6. The control method for a wind farm according to claim 4 or 5,

wherein extraction of the plurality of wind power generators is repeatedly performed, and running or stoppage of the wind power generator in the wind farm is determined so that an output of the wind farm is the maximum at all times.

7. The control method for a wind farm according to claim 4 or 5, wherein the plurality of wind power generators are-extracted when a wind direction changes, and running or stoppage of the wind power generator in the wind farm is determined so that an output of the wind farm is the maximum at all times.

8. The control method for a wind farm according to claim 4 or 5, wherein the plurality of wind power generators are extracted when a wind speed changes, and running or stoppage of the wind power generator in the wind farm is determined so that an output of the wind farm is the maximum at all times.

9. The control method for a wind farm according to any one of claims 1 to 8, wherein, in the wind farm, the wind power generator is run or stopped by performing yaw control on each of the plurality of wind power generators.

10. The control method for a wind farm according to any one of claims 1 to 8, wherein, in the wind farm, the wind power generator is run or stopped by performing pitch control on a blade of each of the plurality of wind power generators.

11. A control system for a wind farm constituted of a plurality of wind power generators disposed on land or on sea, the control system comprising:

a display device that displays wind speed data and output data of each of the plurality of wind power generators;
a combination determining device that calculates combinations of running or stoppage of the respective wind power generators in the wind farm by calculating, by using the wind speed data, the output data, and a predetermined slipstream wind speed evaluation formula, an estimated value for the maximum output of the wind farm in a case where a currently running wind power generator is stopped and an estimated value for the maximum output of the wind farm in a case where a currently stopped wind power generator is run and, comparing the estimated values with measured values for the output of the wind farm; and
a control device that controls running or stoppage of each of the wind power generators in the wind farm on the basis of the combinations.

12. A control system for a wind farm constituted of a plurality of wind power generators disposed on land or on sea, in which the plurality of wind power generators are at least three wind power generators including a first wind power generator provided on a windward side, a second wind power generator provided on a leeward side, and a third wind power generator interposed between the first wind power generator and the second wind power generator, the control system comprising:

a display device that displays wind speed data and output data of each of the first wind power generator, the second wind power generator, and the third wind power generator;
an output estimation device that calculates estimated values for outputs of the second wind power generator and the third wind power generators by using the wind speed data or the output data, and a predetermined slipstream wind speed evaluation formula;
an output comparison device that performs comparison between at least two or more output data items or estimated values for outputs among output data items of the first wind power generator, the second wind power generator, and the third wind power generator, or a total value of output data items of combinations thereof, and estimated values for outputs of the second wind power generator and the third wind power generator, or a total value of the estimated values for the outputs thereof, and thus determines running or stoppage of each of the wind power generators in the wind farm; and
a control device that controls running or stoppage of each of the wind power generators in the wind farm on the basis of the determination result.

13. The control system for a wind farm according to claim 11 or 12, wherein, in the wind farm, the wind power generator is run or stopped by performing yaw control on each of the plurality of wind power generators.

14. The control system for a wind farm according to claim 11 or 12,

wherein, in the wind farm, the wind power generator is run or stopped by performing pitch control on a blade of each of the plurality of wind power generators.

[Fig. 1A]

[Fig. 1B]

[Fig. 2]

```
┌──────────┐  ┌──────────┐              ┌──────────┐  ┌──────────┐                ┌──────┐
│ EXTRACT  │  │ EXTRACT  │ ··········   │ EXTRACT  │  │ EXTRACT  │ ··········     │  Pw  │
│  PsWS1   │  │  PsWS2   │              │  PsWO1   │  │  PsWO2   │                └──────┘
└──────────┘  └──────────┘              └──────────┘  └──────────┘
```

```
              ┌──────────┐                            ┌──────────┐
              │ EXTRACT  │                            │ EXTRACT  │
              │  PsWS    │                            │  PsWO    │
              └──────────┘                            └──────────┘
```

```
              ┌────────────────────────────────────────────┐
              │  EXTRACT MAXIMUM OUTPUT OR ESTIMATED         │
              │  VALUE FOR MAXIMUM OUTPUT OF WIND FARM       │
              └────────────────────────────────────────────┘
```

```
              ┌────────────────────────────────────────────────┐
              │ DERIVE COMBINATIONS RUNNING AND STOPPAGE OF     │
              │ WIND POWER GENERATORS WHEN OUTPUT OR ESTIMATED  │
              │ VALUE FOR OUTPUT OF WIND FARM IS MAXIMUM        │
              └────────────────────────────────────────────────┘
```

COMBINATIONS OF RUNNING AND
STOPPAGE OF WIND POWER
GENERATORS

[Fig. 3]

· SLIPSTREAM WIND SPEED EVALUATION FORMULA
· PARAMETER OF WIND POWER GENERATOR (STOPPED AND WINDWARD)
· WINDWARD WIND SPEED IN WIND POWER GENERATOR (STOPPED AND WINDWARD)

DERIVE ESTIMATED VALUE FOR WIND SPEED AT POSITION OF WIND POWER GENERATOR (STOPPED AND LEEWARD)

· SLIPSTREAM WIND SPEED EVALUATION FORMULA
· PARAMETER OF WIND POWER GENERATOR (STOPPED AND LEEWARD)
· ESTIMATED VALUE FOR WIND SPEED AT POSITION OF WIND POWER GENERATOR (STOPPED AND LEEWARD)

SINGLE WIND POWER GENERATOR (STOPPED AND LEEWARD)

NO

DERIVE ESTIMATED VALUES FOR WIND SPEEDS AT POSITIONS OF OTHER WIND POWER GENERATORS (STOPPED AND LEEWARD)

YES

OUTPUT CURVE OF WIND POWER GENERATOR (STOPPED AND LEEWARD)

DERIVE ESTIMATED VALUE FOR OUTPUT OF WIND POWER GENERATOR (STOPPED AND LEEWARD)

ESTIMATED VALUE FOR OUTPUT OF WIND POWER GENERATOR (STOPPED AND LEEWARD)

[Fig. 4]

```
┌─────────────────────────┐      ┌──────────────────┐      ┌──────────────────────────┐
│ · SLIPSTREAM WIND SPEED  │      │ DERIVE ESTIMATED │      │ · SLIPSTREAM WIND SPEED  │
│ EVALUATION FORMULA       │      │ VALUE FOR WIND   │      │ EVALUATION FORMULA       │
│ · PARAMETER OF WIND POWER│─────▶│ SPEED AT         │      │ · PARAMETER OF WIND POWER│
│ GENERATOR (RUN AND       │      │ POSITION OF WIND │      │ GENERATOR (RUN AND       │
│ WINDWARD)                │      │ POWER            │      │ LEEWARD)                 │
│ · WINDWARD WIND SPEED IN │      │ GENERATOR WHICH  │      │ · ESTIMATED VALUE FOR    │
│ WIND POWER GENERATOR     │      │ IS ASSUMED TO BE │      │ WIND SPEED AT POSITION   │
│ (RUN AND WINDWARD)       │      │ RUN              │      │ OF WIND POWER GENERATOR  │
└─────────────────────────┘      └──────────────────┘      │ (RUN AND LEEWARD)        │
                                                            └──────────────────────────┘
```

- SLIPSTREAM WIND SPEED EVALUATION FORMULA
- PARAMETER OF WIND POWER GENERATOR WHICH IS ASSUMED TO BE RUN
- ESTIMATED VALUE FOR WIND SPEED AT POSITION OF WIND POWER GENERATOR WHICH IS ASSUMED TO BE RUN

DERIVE ESTIMATED VALUE FOR WIND SPEED AT POSITION OF WIND POWER GENERATOR (RUN AND LEEWARD)

SINGLE WIND POWER GENERATOR (STOPPED AND LEEWARD)

NO

DERIVE ESTIMATED VALUES FOR WIND SPEEDS AT POSITIONS OF OTHER WIND POWER GENERATORS (RUN AND LEEWARD)

YES

OUTPUT CURVE OF WIND POWER GENERATOR WHICH IS ASSUMED TO BE RUN
OUTPUT CURVE OF WIND POWER GENERATOR (RUN AND LEEWARD)

DERIVE OUTPUT OF WIND POWER GENERATOR WHICH IS ASSUMED TO BE RUN AND ESTIMATED VALUE FOR OUTPUT OF WIND POWER GENERATOR (RUN AND LEEWARD)

- ESTIMATED VALUE FOR OUTPUT OF WIND POWER GENERATOR WHICH IS ASSUMED TO BE RUN
- ESTIMATED VALUE FOR OUTPUT OF WIND POWER GENERATOR (RUN AND LEEWARD)

[Fig. 5]

U

211   212   213   214   215   216

[Fig. 6A]

INITIAL STATE OF WIND POWER GENERATOR (STATE) IS RUN STATE

· SLIPSTREAM WIND SPEED
EVALUATION FORMULA
· PARAMETER OF WIND POWER
GENERATOR (WINDWARD)
· WINDWARD WIND SPEED IN
WIND POWER GENERATOR
(WINDWARD) → DERIVE $U_{sSD}$

· OUTPUT CURVE OF
WIND POWER
GENERATOR (LEEWARD) → DERIVE $P_{sSD}$

$P_{sSD} < P_{OO}(A_{OO}) + P_{OD}$

YES → RUN WIND POWER
GENERATOR (STATE)

NO → STOP WIND POWER
GENERATOR (STATE)

[Fig. 6B]

INITIAL STATE OF WIND POWER GENERATOR (STATE) IS STOPPED STATE

· SLIPSTREAM WIND SPEED EVALUATION FORMULA
· PARAMETER OF WIND POWER GENERATOR
(WINDWARD)
· PARAMETER OF WIND POWER GENERATOR (STATE)
· WINDWARD WIND SPEED IN WIND POWER
GENERATOR (WINDWARD)
· ESTIMATED VALUE FOR WIND SPEED AT POSITION OF
WIND POWER GENERATOR (STATE)

DERIVE $U_{sOO}$ AND $U_{sOD}$

· OUTPUT CURVE OF WIND
POWER GENERATOR (STATE)
· OUTPUT CURVE OF WIND
POWER GENERATOR
(LEEWARD) → DERIVE $P_{sOO}$ AND $P_{sOD}$

$P_{sOO}(A_{sOO}) + P_{sOD} < P_{SD}$

YES → STOP WIND POWER
GENERATOR (STATE)

NO → RUN WIND POWER
GENERATOR (STATE)

[Fig. 7]

U

| 311 | 312 | 313 | 314 | 315 |
|-----|-----|-----|-----|-----|
| ○ | ○ | ○ | ○ | ○ |

| 321 | 322 | 323 | 324 | 325 |
|-----|-----|-----|-----|-----|
| ○ | ○ | ○ | ○ | ○ |

| 331 | 332 | 333 | 334 | 335 |
|-----|-----|-----|-----|-----|
| ○ | ○ | ○ | ○ | ○ |

| 341 | 342 | 343 | 344 | 345 |
|-----|-----|-----|-----|-----|
| ○ | ○ | ○ | ○ | ○ |

| 351 | 352 | 353 | 354 | 355 |
|-----|-----|-----|-----|-----|
| ○ | ○ | ○ | ○ | ○ |

[Fig. 8]

EXTRACT SET OF WIND POWER GENERATORS

DETERMINE RUNNING AND STOP PAGE OF WIND POWER GENERATOR (STATE)

DETERMINE RUNNING AND STOP PAGE OF WIND POWER GENERATOR (STATE)

DETERMINE RUNNING AND STOP PAGE OF WIND POWER GENERATOR (STATE)

RUN OR STOP WIND POWER GENERATOR (STATE)

RUN OR STOP WIND POWER GENERATOR (STATE)

RUN OR STOP WIND POWER GENERATOR (STATE)

[Fig. 9A]

[Fig. 9B]

[Fig. 9C]

[Fig. 10]

[Fig. 11]

[Fig. 12A]

[Fig. 12B]

[Fig. 13A]

[Fig. 13B]

[Fig. 14A]

○ CURRENTLY RUN WIND POWER GENERATOR

● CURRENTLY STOPPED WIND POWER GENERATOR

[Fig. 14B]

| 311 | 312 | 313 | 314 | 315 |
| 321 | 322 | 323 | 324 | 325 |
| 331 | 332 | 333 | 334 | 335 |
| 341 | 342 | 343 | 344 | 345 |
| 351 | 352 | 353 | 354 | 355 |

U

◯ CURRENTLY RUN WIND POWER GENERATOR

● CURRENTLY STOPPED WIND POWER GENERATOR

[Fig. 15A]

U₁

| 311 | 312 | 313 | 314 | 315 |
| 321 | 322 | 323 | 324 | 325 |
| 331 | 332 | 333 | 334 | 335 |
| 341 | 342 | 343 | 344 | 345 |
| 351 | 352 | 353 | 354 | 355 |

◯ CURRENTLY RUN WIND POWER GENERATOR

[Fig. 15B]

CURRENTLY RUN WIND POWER GENERATOR

CURRENTLY STOPPED WIND POWER GENERATOR

## INTERNATIONAL SEARCH REPORT

International application No.

PCT/JP2014/056891

| A. CLASSIFICATION OF SUBJECT MATTER |
|---|
| F03D7/02(2006.01)i |

According to International Patent Classification (IPC) or to both national classification and IPC

| B. FIELDS SEARCHED |
|---|
| Minimum documentation searched (classification system followed by classification symbols)<br>F03D7/02 |

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2010-127235 A (Chubu Electric Power Co., Inc.),<br>10 June 2010 (10.06.2010),<br>entire text; all drawings<br>(Family: none) | 1–14 |
| A | JP 2010-526963 A (Siemens AG.),<br>05 August 2010 (05.08.2010),<br>entire text; all drawings<br>& US 2011/0006525 A1 & EP 2145103 A2<br>& WO 2008/138738 A2 | 1–14 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>10 June, 2014 (10.06.14) | Date of mailing of the international search report<br>17 June, 2014 (17.06.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2014/056891 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2012/056564 A1  (Mitsubishi Heavy Industries, Ltd.), 03 May 2012 (03.05.2012), entire text; all drawings & US 2011/0187106 A1    & EP 2634420 A1 & JP 5433682 B2 | 1-14 |
| A | JP 2013-053592 A  (Tokyo Institute of Technology), 21 March 2013 (21.03.2013), entire text; all drawings (Family: none) | 1-14 |
| A | US 2007/0124025 A1  (GENERAL ELECTRIC CO.), 31 May 2007 (31.05.2007), entire text; all drawings & EP 1790851 A2 | 1-14 |
| A | US 2012/0133138 A1  (VESTAS WIND SYSTEMS A/S), 31 May 2012 (31.05.2012), entire text; all drawings (Family: none) | 1-14 |
| A | US 2012/0257968 A1  (Soren DALSGAARD), 11 October 2012 (11.10.2012), entire text; all drawings & WO 2011/072689 A2 | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011007085 A